(19) Europäisches Patentamt
European Patent Office
Office européen des brevets

(11) **EP 4 600 922 A1**

(12) **EUROPEAN PATENT APPLICATION**

(43) Date of publication:
**13.08.2025 Bulletin 2025/33**

(21) Application number: **25174744.0**

(22) Date of filing: **26.02.2021**

(51) International Patent Classification (IPC):
*G06V 40/20* (2022.01)    *G06V 10/143* (2022.01)
*G06V 10/10* (2022.01)    *G06V 10/26* (2022.01)
*G06V 10/60* (2022.01)    *G06V 10/75* (2022.01)
*G06V 20/64* (2022.01)    *G06V 40/10* (2022.01)

(52) Cooperative Patent Classification (CPC):
**G06V 20/64; G06V 10/143; G06V 10/26;
G06V 10/60; G06V 10/751; G06V 40/113;
G06V 40/20; G06V 40/28;** G06V 10/17

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2020 EP 20159984**

(62) Document number(s) of the earlier application(s) in
accordance with Art. 76 EPC:
**21707277.6 / 4 111 358**

(71) Applicant: **trinamiX GmbH
67063 Ludwigshafen am Rhein (DE)**

(72) Inventors:
• **Unger, Jakob
79106 Freiburg im Breisgau (DE)**
• **Schillen, Peter
68161 Mannheim (DE)**

• **Schindler, Patrick
67059 Ludwigshafen am Rhein (DE)**
• **Lennartz, Christian
67059 Ludwigshafen am Rhein (DE)**
• **Send, Robert
76137 Karlsruhe (DE)**

(74) Representative: **BASF IP Association
BASF SE
GBI - Z078
67056 Ludwigshafen (DE)**

Remarks:
This application was filed on 07-05-2025 as a
divisional application to the application mentioned
under INID code 62.

(54) **GESTURE RECOGNITION**

(57)    Detector (110) for gesture detection comprising
- an illumination source (112) configured for projecting an
illumination pattern comprising a plurality of illumination
features on an area (114) comprising an object (116),
wherein the object (116) comprises a face;
- an optical sensor (118) having a light-sensitive area
(126), wherein the optical sensor (118) is configured for
determining an image (128) of the area, wherein the
image (128) comprises a plurality of reflection features
(130) generated by the area (114) in response to illumination by the illumination features;
- an evaluation device (136), wherein the evaluation
device (136) is configured for determining a depth map
of the area by determining depth information for the
reflection features (130),

wherein the evaluation device (136) is configured for
identifying a reflection feature (130) as being generated
by illuminating skin by comparing its intensity distribution
with a predetermined or predefined intensity distribution,
wherein the evaluation device (136) is configured for
segmenting the image (128) of the area by using a
segmentation algorithm,
wherein the evaluation device (136) is configured for
determining an orientation of the object (116) in space
considering the segmented image and the depth map.

**EP 4 600 922 A1**

# FIG.1

## Description

Field of the invention

The invention relates to a detector for gesture detection and a method for gesture detection and various uses of the detector. The devices, methods and uses according to the present invention specifically may be employed for example in various areas of daily life, security technology, gaming, traffic technology, production technology, photography such as digital photography or video photography for arts, documentation or technical purposes, safety technology, information technology, agriculture, crop protection, maintenance, cosmetics, medical technology or in the sciences. However, other applications are also possible.

Prior art

The trend towards automated vehicles is not only pushing towards autonomous driving but is also affecting assistance functions in the cabin. Driver monitoring, in-cabin surveillance and gesture tracking are basic concepts for next generation cars. First systems are already available and rely on 2D images, 3D depth maps, or a combination of both.
From a technical point of view, detection of human postures and gestures for in-cabin scenarios can be highly challenging. Existing methods based on 2D image processing rely on color features, e.g. as described in A. R. Várkonyi-Kóczy, B. Tusor, "Human-Computer Interaction for Smart Environment Applications Using Fuzzy Hand Posture and Gesture Models", IEEE Trans. Instrumentation and Measurement, vol. 60, no. 5, pp. 1505-1514, 2011 or C. C. Hsieh, D. H. Liou, "Novel Haar features for real-time hand gesture recognition", J. Real Time Image Processing, vol. 10, pp. 357370, 2015, and shape features, see e.g. E. Ong, R. Bowden, "A boosted classifier tree for hand shape detection," Sixth IEEE International Conference on Automatic Face and Gesture Recognition, 2004. Proceedings., Seoul, South Korea, 2004, pp. 889-894. However, due to the high variation in appearance of hands, shadows and a broad range of light conditions, the robustness of these methods is rather limited, see M. Bergh, L. Gool, "Combining RGB and ToF cameras for real-time 3D hand gesture interaction", In: Workshop on applications of computer vision (WACV), IEEE, pp. 66-72, 2011.
Motion analysis, e.g. using the optical flow, can fill this gap under certain conditions, see e.g. R. Cutler, M. Turk. "View-based Interpretation of Realtime Optical Flow for Gesture Recognition", In Proc. IEEE Intl. Conference on Automatic Face and Gesture Recognition, pp. 416-421, 1998, but still lacks for static scenes or insufficient contrast. Depth maps, e.g. from time of flight cameras or stereo approaches, provide complementary data that can considerably improve detection accuracy. The combination of 2D cameras with 3D sensors provides more reliable detection accuracy but demands comprehensive fusion concepts, careful calibration and causes significantly higher costs. Moreover, separating multiple objects positioned in a similar depth is still challenging.
In a conventional 2D or 3D gesture detection setup, the hand has to be recognized within a 2D picture or 3D point cloud. The hand recognition taken alone is a challenging part, as contrast to the background can be low in the 2D picture, hand color can vary strongly dependent on skin type and illumination conditions, and especially, the hand has to be recognized as a hand, for which model data such as shape, color, etc need to match. Shape however varies strongly, since the shape transmits part of the information in the gesture. Fingers might even be missing due to permanent injuries or may be just obscured by other objects.
Moreover, WO 2018/091640 and WO 2019/042956 describe accurately detecting distances using a single CMOS sensor combined with a laser grid projector for 2D pictures and depth measurement. All data is coming from a single CMOS sensor allowing for an easy and quick integration. Thus, system complexity is significantly reduced compared to the combination of separate image and depth sensors.
US 2016/253821 A1 describes an object which is identified or tracked within a volume by projecting a light beam encoded with one or more predefined properties to have a predefined optical structure into the volume. A detector captures light from the predefined optical structure reflected from the volume. By analyzing one or more characteristics of light from the predefined optical structure reflected from the object, the object is segmented from the volume.

Problem addressed by the invention

It is therefore an object of the present invention to provide devices and methods facing the above-mentioned technical challenges of known devices and methods. Specifically, it is an object of the present invention to provide devices and methods which allow reliable gesture detection with a low technical effort and with low requirements in terms of technical resources and cost.

Summary of the invention

This problem is solved by the invention with the features of the independent patent claims. Advantageous developments of the invention, which can be realized individually or in combination, are presented in the dependent claims and/or in the following specification and detailed embodiments.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such a way with other optional or non-optional features of the invention.

In a first aspect of the present invention a device for gesture detection is disclosed. As used herein, the term "gesture" may refer to at least one state and/or at least one action of at least one part of a human's body. The gesture may comprise body gesture such as of at least one part of the body, in particular hand gesture. The gesture may be static or dynamic. The gesture may comprise movement of at least one part of a hand, such as of a finger, movement of one or both hands, face, or other parts of the body. As used herein, the term "gesture detection" may refer to determining presence or absence of a gesture and/or gesture recognition. As used herein, the term "gesture recognition" may refer to interpreting of human gestures via mathematical algorithms. As used herein, the term "detector for gesture detection" may refer to at least one arbitrary device configured for detection of at least one gesture.

The detector for gesture detection comprises

- at least one illumination source configured for projecting at least one illumination pattern comprising a plurality of illumination features on at least one area comprising at least one object, wherein the object comprises at least partially at least one human hand;
- at least one optical sensor having at least one light-sensitive area, wherein the optical sensor is configured for determining at least one image of the area, wherein the image comprises a plurality of reflection features generated by the area in response to illumination by the illumination features;
- at least one evaluation device, wherein the evaluation device is configured for determining at least one depth map of the area by determining at least one depth information for each of the reflection features,

wherein the evaluation device is configured for finding the object by identifying the reflection features which were generated by illuminating biological tissue, wherein the evaluation device is configured for determining at least one reflection beam profile of each of the reflection features, wherein the evaluation device is configured for identifying a reflection feature as to be generated by illuminating biological tissue in case its reflection beam profile fulfills at least one predetermined or predefined criterion, wherein the evaluation device is configured for identifying the reflection feature as to be background otherwise,
wherein the evaluation device is configured for segmenting the image of the area by using at least one segmentation algorithm, wherein the reflection features identified as to be generated by illuminating biological tissue are used as seed points and the reflection features identified as background are used as background seed points for the segmentation algorithm,
wherein the evaluation device is configured for determining position and/or orientation of the object in space considering the segmented image and the depth map.

As used herein, the term "illumination source" may generally refers to at least one arbitrary device configured for generating at least one illumination pattern. The illumination source may be configured for providing the illumination pattern for illumination of the area. The illumination source may be adapted to directly or indirectly illuminating the area, wherein the illumination pattern is reflected or scattered by surfaces of the area and, thereby, is at least partially directed towards the optical sensor. The illumination source may be configured for illuminating the area, for example, by directing a light beam towards the area, which reflects the light beam. The illumination source may be configured for generating an illuminating light beam for illuminating the area.

As used herein, the term "area" may refer to at least one arbitrary object or spatial region. The area may comprise the at least one object and a surrounding environment. As used herein, the term "object" refers to a point or region emitting at least one light beam, in particular the at least one reflection pattern. For example, the object may be at least one object selected from the group consisting of: a scene, a human such as a human, wood, carpet, foam, an animal such as a cow, a plant, a piece of tissue, a metal, a toy, a metallic object, a beverage, a food such as a fruit, meat, fish, a dish, a cosmetics product, an applied cosmetics product, cloth, fur, hair, a maintenance product, a plant, a body, a part of a body, organic material, inorganic material, a reflective material, a screen, a display, a wall, a sheet of paper, such as photograph. The object may comprise at least one surface on which the illumination pattern is projected. The surface may be adapted to at least partially reflect the illumination pattern back towards the detector. The object may, specifically, be a human body or at least one part of a human body such as at least one arm, at least one hand, at least one finger or a face. The object comprises at least partially at least one human hand. As used herein, the term "at least partially at least one human hand" refers to embodiments wherein the object is the human hand and/or embodiments wherein the object is at least one finger and/or at least one part of a palm.

The illumination source may comprise at least one light source. The illumination source may comprise a plurality of light sources. The illumination source may comprise an artificial illumination source, in particular at least one laser source and/or at least one incandescent lamp and/or at least one semiconductor light source, for example, at least one light-emitting diode, in particular an organic and/or inorganic light-emitting diode. As an example, the light emitted by the illumination source may have a wavelength of 300 to 1100nm, especially 500 to 1100 nm. Additionally or alternatively, light in the infrared spectral range may be used, such as in the range of 780 nm to 3.0 $\mu$m. Specifically, the light in the part of the near infrared region where silicon photodiodes are applicable specifically in the range of 700 nm to 1100 nm may be used. The illumination source may be configured for generating the at least one illumination pattern in the infrared region. Using light in the near infrared region allows that light is not or only weakly detected by human eyes and is still detectable by silicon sensors, in particular standard silicon sensors.

As used herein, the term "ray" generally refers to a line that is perpendicular to wavefronts of light which points in a direction of energy flow. As used herein, the term "beam" generally refers to a collection of rays. In the following, the terms "ray" and "beam" will be used as synonyms. As further used herein, the term "light beam" generally refers to an amount of light, specifically an amount of light traveling essentially in the same direction, including the possibility of the light beam having a spreading angle or widening angle. The light beam may have a spatial extension. Specifically, the light beam may have a non-Gaussian beam profile. The beam profile may be selected from the group consisting of a trapezoid beam profile; a triangle beam profile; a conical beam profile. The trapezoid beam profile may have a plateau region and at least one edge region. The light beam specifically may be a Gaussian light beam or a linear combination of Gaussian light beams, as will be outlined in further detail below. Other embodiments are feasible, however.

The illumination source may be configured for emitting light at a single wavelength. Specifically, the wavelength may be in the near infrared region. In other embodiments, the illumination source may be configured for emitting light with a plurality of wavelengths allowing additional measurements in other wavelengths channels.

The illumination source may be or may comprise at least one multiple beam light source. For example, the illumination source may comprise at least one laser source and one or more diffractive optical elements (DOEs). Specifically, the illumination source may comprise at least one laser and/or laser source. Various types of lasers may be employed, such as semiconductor lasers, double heterostructure lasers, external cavity lasers, separate confinement heterostructure lasers, quantum cascade lasers, distributed bragg reflector lasers, polariton lasers, hybrid silicon lasers, extended cavity diode lasers, quantum dot lasers, volume Bragg grating lasers, Indium Arsenide lasers, transistor lasers, diode pumped lasers, distributed feedback lasers, quantum well lasers, interband cascade lasers, Gallium Arsenide lasers, semiconductor ring laser, extended cavity diode lasers, or vertical cavity surface-emitting lasers. Additionally or alternatively, non-laser light sources may be used, such as LEDs and/or light bulbs. The illumination source may comprise one or more diffractive optical elements (DOEs) adapted to generate the illumination pattern. For example, the illumination source may be adapted to generate and/or to project a cloud of points, for example the illumination source may comprise one or more of at least one digital light processing projector, at least one LCoS projector, at least one spatial light modulator; at least one diffractive optical element; at least one array of light emitting diodes; at least one array of laser light sources. On account of their generally defined beam profiles and other properties of handleability, the use of at least one laser source as the illumination source is particularly preferred. The illumination source may be integrated into a housing of the detector.

Further, the illumination source may be configured for emitting modulated or non-modulated light. In case a plurality of illumination sources is used, the different illumination sources may have different modulation frequencies which later on may be used for distinguishing the light beams.

The light beam or light beams generated by the illumination source generally may propagate parallel to the optical axis or tilted with respect to the optical axis, e.g. including an angle with the optical axis. The detector may be configured such that the light beam or light beams propagates from the detector towards the area along an optical axis of the detector. For this purpose, the detector may comprise at least one reflective element, preferably at least one prism, for deflecting the illuminating light beam onto the optical axis. As an example, the light beam or light beams, such as the laser light beam, and the optical axis may include an angle of less than 10°, preferably less than 5° or even less than 2°. Other embodiments, however, are feasible. Further, the light beam or light beams may be on the optical axis or off the optical axis. As an example, the light beam or light beams may be parallel to the optical axis having a distance of less 10 than 10 mm to the optical axis, preferably less than 5 mm to the optical axis or even less than 1 mm to the optical axis or may even coincide with the optical axis.

As used herein, the term "at least one illumination pattern" refers to at least one arbitrary pattern comprising at least one illumination feature adapted to illuminate at least one part of the area. As used herein, the term "illumination feature" refers to at least one at least partially extended feature of the pattern. The illumination pattern may comprise a single illumination feature. The illumination pattern may comprise a plurality of illumination features. The illumination pattern may be selected from the group consisting of: at least one point pattern; at least one line pattern; at least one stripe pattern; at least one checkerboard pattern; at least one pattern comprising an arrangement of periodic or non periodic features. The illumination pattern may comprise regular and/or constant and/or periodic pattern such as a triangular pattern, a rectangular pattern, a hexagonal pattern or a pattern comprising further convex tilings. The illumination pattern may exhibit the at least one illumination feature selected from the group consisting of: at least one point; at least one line; at least two lines such as parallel or crossing lines; at least one point and one line; at least one arrangement of periodic or non-periodic feature; at least one arbitrary shaped featured. The illumination pattern may comprise at least one pattern selected from the group consisting of: at least one point pattern, in particular a pseudo-random point pattern; a random point pattern or a quasi random pattern; at least one Sobol pattern; at least one quasiperiodic pattern; at least one pattern comprising at least one pre-known feature at least one regular pattern; at least one triangular pattern; at least one hexagonal pattern; at least one rectangular pattern at least one pattern comprising convex uniform tilings; at least one line pattern comprising at least one line; at least one line pattern comprising at least two lines such as parallel or crossing lines. For example, the illumination source may be adapted to generate and/or to project a cloud of points. The illumination source may comprise the at least one light projector adapted to generate a cloud of points such that the illumination pattern may comprise a plurality of point pattern. The illumination source may comprise at least one mask adapted to generate the illumination pattern from at least one light beam generated by the illumination source.

A distance between two features of the illumination pattern and/or an area of the at least one illumination feature may depend on the circle of confusion in the image. As outlined above, the illumination source may comprise the at least one light source configured for generating the at least one illumination pattern. Specifically, the illumination source comprises at least one laser source and/or at least one laser diode which is designated for generating laser radiation. The illumination source may comprise the at least one diffractive optical element (DOE). The detector may comprise at least one point projector, such as the at least one laser source and the DOE, adapted to project at least one periodic point pattern.

As further used herein, the term "projecting at least one illumination pattern" refers to providing the at least one illumination pattern for illuminating the at least one area.

As used herein, an "optical sensor" generally refers to a light-sensitive device for detecting a light beam, such as for detecting an illumination and/or a light spot generated by at least one light beam. As further used herein, a "light-sensitive area" generally refers to an area of the optical sensor which may be illuminated externally, by the at least one light beam, in response to which illumination at least one sensor signal is generated. The light-sensitive area may specifically be located on a surface of the respective optical sensor. Other embodiments, however, are feasible. The detector may comprise a plurality of optical sensors each having a light sensitive area. As used herein, the term "the optical sensors each having at least one light sensitive area" refers to configurations with a plurality of single optical sensors each having one light sensitive area and to configurations with one combined optical sensor having a plurality of light sensitive areas. The term "optical sensor" furthermore refers to a light-sensitive device configured to generate one output signal. In case the detector comprises a plurality of optical sensors, each optical sensor may be embodied such that precisely one light-sensitive area is present in the respective optical sensor, such as by providing precisely one light-sensitive area which may be illuminated, in response to which illumination precisely one uniform sensor signal is created for the whole optical sensor. Thus, each optical sensor may be a single area optical sensor. The use of the single area optical sensors, however, renders the setup of the detector specifically simple and efficient. Thus, as an example, commercially available photo-sensors, such as commercially available silicon photodiodes, each having precisely one sensitive area, may be used in the set-up. Other embodiments, however, are feasible.

Preferably, the light sensitive area may be oriented essentially perpendicular to an optical axis of the detector. The optical axis may be a straight optical axis or may be bent or even split, such as by using one or more deflection elements and/or by using one or more beam splitters, wherein the essentially perpendicular orientation, in the latter cases, may refer to the local optical axis in the respective branch or beam path of the optical setup.

The optical sensor specifically may be or may comprise at least one photodetector, preferably inorganic photodetectors, more preferably inorganic semiconductor photodetectors, most preferably silicon photodetectors. Specifically, the optical sensor may be sensitive in the infrared spectral range. The optical sensor may comprise at least one sensor element comprising a matrix of pixels. All pixels of the matrix or at least a group of the optical sensors of the matrix specifically may be identical. Groups of identical pixels of the matrix specifically may be provided for different spectral ranges, or all pixels may be identical in terms of spectral sensitivity. Further, the pixels may be identical in size and/or with regard to their electronic or optoelectronic properties. Specifically, the optical sensor may be or may comprise at least one inorganic photodiode which are sensitive in the infrared spectral range, preferably in the range of 700 nm to 3.0 micrometers. Specifically, the optical sensor may be sensitive in the part of the near infrared region where silicon photodiodes are applicable specifically in the range of 700 nm to 1100 nm. Infrared optical sensors which may be used for optical sensors may be commercially available infrared optical sensors, such as infrared optical sensors commercially available under the brand name Hertzstueck™ from trinamiX™ GmbH, D-67056 Ludwigshafen am Rhein, Germany. Thus, as an example, the optical sensor may comprise at least one optical sensor of an intrinsic photovoltaic type, more preferably at least one semiconductor photodiode selected from the group consisting of: a Ge photodiode, an InGaAs photodiode, an extended InGaAs photodiode, an InAs photodiode, an InSb photodiode, a HgCdTe photodiode. Additionally or alternatively, the optical sensor may comprise at least one optical sensor of an extrinsic photovoltaic type, more preferably at least one semiconductor photodiode selected from the group consisting of: a Ge:Au photodiode, a Ge:Hg photodiode, a Ge:Cu photodiode, a Ge:Zn photodiode, a Si:Ga photodiode, a Si:As photodiode. Additionally or alternatively, the optical sensor may comprise at least one photoconductive sensor such as a PbS or PbSe sensor, a bolometer, preferably a bolometer selected from the group consisting of a VO bolometer and an amorphous Si bolometer.

The optical sensor may be sensitive in one or more of the ultraviolet, the visible or the infrared spectral range. Specifically, the optical sensor may be sensitive in the visible spectral range from 500 nm to 780 nm, most preferably at 650 nm to 750 nm or at 690 nm to 700 nm. Specifically, the optical sensor may be sensitive in the near infrared region. Specifically, the optical sensor may be sensitive in the part of the near infrared region where silicon photodiodes are applicable specifically in the range of 700 nm to 1000 nm. The optical sensor, specifically, may be sensitive in the infrared spectral range, specifically in the range of 780 nm to 3.0 micrometers. For example, the optical sensor each, independently, may be or may comprise at least one element selected from the group consisting of a photodiode, a photocell, a photoconductor, a phototransistor or any combination thereof. For example, the optical sensor may be or may comprise at least one element selected from the group consisting of a CCD sensor element, a CMOS sensor element, a photodiode, a photocell, a photoconductor, a phototransistor or any combination thereof. Any other type of photosensitive element may be used. The photosensitive element generally may fully or partially be made of inorganic materials and/or may fully or partially be made of organic materials. Most commonly, one or more photodiodes may be used, such as commercially available photodiodes, e.g. inorganic semiconductor photodiodes.

The optical sensor may comprise at least one sensor element comprising a matrix of pixels. Thus, as an example, the optical sensor may be part of or constitute a pixelated optical device. For example, the optical sensor may be and/or may comprise at least one CCD and/or CMOS device. As an example, the optical sensor may be part of or constitute at least one CCD and/or CMOS device having a matrix of pixels, each pixel forming a light-sensitive area.

As used herein, the term "sensor element" generally refers to a device or a combination of a plurality of devices configured for sensing at least one parameter. In the present case, the parameter specifically may be an optical parameter, and the sensor element specifically may be an optical sensor element. The sensor element may be formed as a unitary, single device or as a combination of several devices. The sensor element comprises a matrix of optical sensors. The sensor element may comprise at least one CMOS sensor. The matrix may be composed of independent pixels such as of independent optical sensors. Thus, a matrix of inorganic photodiodes may be composed. Alternatively, however, a commercially available matrix may be used, such as one or more of a CCD detector, such as a CCD detector chip, and/or a CMOS detector, such as a CMOS detector chip. Thus, generally, the sensor element may be and/or may comprise at least one CCD and/or CMOS device and/or the optical sensors may form a sensor array or may be part of a sensor array, such as the above-mentioned matrix. Thus, as an example, the sensor element may comprise an array of pixels, such as a rectangular array, having m rows and n columns, with m, n, independently, being positive integers. Preferably, more than one column and more than one row is given, i.e. n>1, m>1. Thus, as an example, n may be 2 to 16 or higher and m may be 2 to 16 or higher. Preferably, the ratio of the number of rows and the number of columns is close to 1. As an example, n and m may be selected such that $0.3 \leq m/n \leq 3$, such as by choosing m/n = 1:1, 4:3, 16:9 or similar. As an example, the array may be a square array, having an equal number of rows and columns, such as by choosing m=2, n=2 or m=3, n=3 or the like.

The matrix may be composed of independent pixels such as of independent optical sensors. Thus, a matrix of inorganic photodiodes may be composed. Alternatively, however, a commercially available matrix may be used, such as one or more of a CCD detector, such as a CCD detector chip, and/or a CMOS detector, such as a CMOS detector chip. Thus, generally, the optical sensor may be and/or may comprise at least one CCD and/or CMOS device and/or the optical sensors of the detector may form a sensor array or may be part of a sensor array, such as the above-mentioned matrix.

The matrix specifically may be a rectangular matrix having at least one row, preferably a plurality of rows, and a plurality of columns. As an example, the rows and columns may be oriented essentially perpendicular. As used herein, the term "essentially perpendicular" refers to the condition of a perpendicular orientation, with a tolerance of e.g. $\pm 20°$ or less, preferably a tolerance of $\pm 10°$ or less, more preferably a tolerance of $\pm 5°$ or less. Similarly, the term "essentially parallel" refers to the condition of a parallel orientation, with a tolerance of e.g. $\pm 20°$ or less, preferably a tolerance of $\pm 10°$ or less, more preferably a tolerance of $\pm 5°$ or less. Thus, as an example, tolerances of less than 20°, specifically less than 10° or even less than 5°, may be acceptable. In order to provide a wide range of view, the matrix specifically may have at least 10 rows, preferably at least 500 rows, more preferably at least 1000 rows. Similarly, the matrix may have at least 10 columns, preferably at least 500 columns, more preferably at least 1000 columns. The matrix may comprise at least 50 optical sensors, preferably at least 100000 optical sensors, more preferably at least 5000000 optical sensors. The matrix may comprise a number of pixels in a multi-mega pixel range. Other embodiments, however, are feasible. Thus, in setups in which an axial rotational symmetry is to be expected, circular arrangements or concentric arrangements of the optical sensors of the matrix, which may also be referred to as pixels, may be preferred.

Thus, as an example, the sensor element may be part of or constitute a pixelated optical device. For example, the sensor element may be and/or may comprise at least one CCD and/or CMOS device. As an example, the sensor element may be part of or constitute at least one CCD and/or CMOS device having a matrix of pixels, each pixel forming a light-sensitive area. The sensor element may employ a rolling shutter or global shutter method to read out the matrix of optical sensors.

The detector further may comprise at least one transfer device. The detector may further comprise one or more additional elements such as one or more additional optical elements. The detector may comprise at least one optical element selected from the group consisting of: transfer device, such as at least one lens and/or at least one lens system, at least one diffractive optical element. The term "transfer device", also denoted as "transfer system", may generally refer to one or more optical elements which are adapted to modify the light beam, such as by modifying one or more of a beam parameter of the light beam, a width of the light beam or a direction of the light beam. The transfer device may be adapted to guide the light beam onto the optical sensor. The transfer device specifically may comprise one or more of: at least one lens, for example at least one lens selected from the group consisting of at least one focus-tunable lens, at least one aspheric lens, at least one spheric lens, at least one Fresnel lens; at least one diffractive optical element; at least one concave mirror; at least one beam deflection element, preferably at least one mirror; at least one beam splitting element, preferably at least one of a beam splitting cube or a beam splitting mirror; at least one multi-lens system. As used herein, the term "focal length" of the transfer device refers to a distance over which incident collimated rays which may impinge the transfer device are brought into a "focus" which may also be denoted as "focal point". Thus, the focal length constitutes a measure of an ability of the transfer device to converge an impinging light beam. Thus, the transfer device may comprise one or more imaging elements which can have the effect of a converging lens. By way of example, the transfer device can have one or more lenses, in particular one or more refractive lenses, and/or one or more convex mirrors. In this example, the focal length may be defined as a distance from the center of the thin refractive lens to the principal focal points of the thin lens. For a converging thin refractive lens, such as a convex or biconvex thin lens, the focal length may be considered as being positive and may provide the distance at which a beam of collimated light impinging the thin lens as the transfer device may be focused into a single spot. Additionally, the transfer device can comprise at least one wavelength-selective element, for example at least one optical filter. Additionally, the transfer device can be designed to impress a predefined beam profile on the electromagnetic radiation, for example, at the location of the sensor region and in particular the sensor area. The abovementioned optional embodiments of the transfer device can, in principle, be realized individually or in any desired combination.

The transfer device may have an optical axis. In particular, the detector and the transfer device have a common optical axis. As used herein, the term "optical axis of the transfer device" generally refers to an axis of mirror symmetry or rotational symmetry of the lens or lens system. The optical axis of the detector may be a line of symmetry of the optical setup of the detector. The detector may comprise the transfer device, preferably at least one transfer system having at least one lens. The transfer system, as an example, may comprise at least one beam path, with the elements of the transfer system in the beam path being located in a rotationally symmetrical fashion with respect to the optical axis. Still, as will also be outlined in further detail below, one or more optical elements located within the beam path may also be off-centered or tilted with respect to the optical axis. In this case, however, the optical axis may be defined sequentially, such as by interconnecting the centers of the optical elements in the beam path, e.g. by interconnecting the centers of the lenses, wherein, in this context, the optical sensors are not counted as optical elements. The optical axis generally may denote the beam path. Therein, the detector may have a single beam path along which a light beam may travel from the object to the optical sensors, or may have a plurality of beam paths. As an example, a single beam path may be given or the beam path may be split into two or more partial beam paths. In the latter case, each partial beam path may have its own optical axis. In case of a plurality of optical sensors, the optical sensors may be located in one and the same beam path or partial beam path. Alternatively, however, the optical sensors may also be located in different partial beam paths.

The transfer device may constitute a coordinate system, wherein a longitudinal coordinate is a coordinate along the optical axis and wherein d is a spatial offset from the optical axis. The coordinate system may be a polar coordinate system in which the optical axis of the transfer device forms a z-axis and in which a distance from the z-axis and a polar angle may be used as additional coordinates. A direction parallel or antiparallel to the z-axis may be considered a longitudinal direction, and a coordinate along the z-axis may be considered a longitudinal coordinate. Any direction perpendicular to the z-axis may be considered a transversal direction, and the polar coordinate and/or the polar angle may be considered a transversal coordinate.

The detector may constitute a coordinate system in which an optical axis of the detector forms the z-axis and in which, additionally, an x-axis and a y-axis may be provided which are perpendicular to the z-axis and which are perpendicular to each other. As an example, the detector and/or a part of the detector may rest at a specific point in this coordinate system, such as at the origin of this coordinate system. In this coordinate system, a direction parallel or antiparallel to the z-axis may be regarded as a longitudinal direction, and a coordinate along the z-axis may be considered a longitudinal coordinate. An arbitrary direction perpendicular to the longitudinal direction may be considered a transversal direction, and an x- and/or y-coordinate may be considered a transversal coordinate.

Alternatively, other types of coordinate systems may be used. Thus, as an example, a polar coordinate system may be used in which the optical axis forms a z-axis and in which a distance from the z-axis and a polar angle may be used as additional coordinates. Again, a direction parallel or antiparallel to the z-axis may be considered a longitudinal direction, and a coordinate along the z-axis may be considered a longitudinal coordinate. Any direction perpendicular to the z-axis may be considered a transversal direction, and the polar coordinate and/or the polar angle may be considered a transversal coordinate.

The optical sensor is configured for determining at least one image of the area. When the area is illuminated by the illumination features the area, i.e. the parts of the area which are illuminated by the illumination features, reflects and/or remits the impinging light beams of the illumination features towards the detector, which can thus image these reflected and/or remitted illumination features. Thereby, the area may generate the reflection features. The image comprises a plurality of reflection features generated by the area in response to illumination by the illumination features. As used herein, without limitation, the term "image" specifically may relate to data recorded by using the optical sensor, such as a plurality of electronic readings from an imaging device, such as the pixels of the sensor element. The image itself, thus, may comprise pixels, the pixels of the image correlating to pixels of the matrix of the sensor element. Consequently, when referring to "pixels", reference is either made to the units of image information generated by the single pixels of the sensor element or to the single pixels of the sensor element directly. The image may be at least one two-dimensional image. As used herein, the term "two dimensional image" may generally refer to an image having information about transversal coordinates such as the dimensions of height and width. The image may be an RGB (red green blue) image. As used herein, the term "reflection feature" may refer to a feature in an image plane generated by the area in response to illumination, specifically with at least one illumination feature.

The detector comprises the at least one evaluation device. The evaluation device is configured for evaluating the image. As further used herein, the term "evaluation device" generally refers to an arbitrary device adapted to perform the named operations, preferably by using at least one data processing device and, more preferably, by using at least one processor and/or at least one application-specific integrated circuit. Thus, as an example, the at least one evaluation device may comprise at least one data processing device having a software code stored thereon comprising a number of computer commands. The evaluation device may provide one or more hardware elements for performing one or more of the named operations and/or may provide one or more processors with software running thereon for performing one or more of the named operations. Operations, including evaluating the images. Specifically the determining a beam profile and indication of the surface, may be performed by the at least one evaluation device. Thus, as an example, one or more instructions may be implemented in software and/or hardware. Thus, as an example, the evaluation device may comprise one or more programmable devices such as one or more computers, application-specific integrated circuits (ASICs), Digital Signal Processors (DSPs), or Field Programmable Gate Arrays (FPGAs) which are configured to perform the above-mentioned evaluation. Additionally or alternatively, however, the evaluation device may also fully or partially be embodied by hardware.

The evaluation device and the detector may fully or partially be integrated into a single device. Thus, generally, the evaluation device also may form part of the detector. Alternatively, the evaluation device and the detector may fully or partially be embodied as separate devices. The detector may comprise further components.

The evaluation device may be or may comprise one or more integrated circuits, such as one or more application-specific integrated circuits (ASICs), and/or one or more data processing devices, such as one or more computers, preferably one or more microcomputers and/or microcontrollers, Field Programmable Arrays, or Digital Signal Processors. Additional components may be comprised, such as one or more preprocessing devices and/or data acquisition devices, such as one or more devices for receiving and/or preprocessing of the sensor signals, such as one or more AD-converters and/or one or more filters. Further, the evaluation device may comprise one or more measurement devices, such as one or more measurement devices for measuring electrical currents and/or electrical voltages. Further, the evaluation device may comprise one or more data storage devices. Further, the evaluation device may comprise one or more interfaces, such as one or more wireless interfaces and/or one or more wire-bound interfaces.

The evaluation device can be connected to or may comprise at least one further data processing device that may be used for one or more of displaying, visualizing, analyzing, distributing, communicating or further processing of information, such as information obtained by the optical sensor and/or by the evaluation device. The data processing device, as an example, may be connected or incorporate at least one of a display, a projector, a monitor, an LCD, a TFT, a loudspeaker, a multichannel sound system, an LED pattern, or a further visualization device. It may further be connected or incorporate at least one of a communication device or communication interface, a connector or a port, capable of sending encrypted or unencrypted information using one or more of email, text messages, telephone, Bluetooth, Wi-Fi, infrared or internet interfaces, ports or connections. It may further be connected to or incorporate at least one of a processor, a graphics processor, a CPU, an Open Multimedia Applications Platform (OMAP™), an integrated circuit, a system on a chip such as products from the Apple A series or the Samsung S3C2 series, a microcontroller or microprocessor, one or more memory blocks such as ROM, RAM, EEPROM, or flash memory, timing sources such as oscillators or phase-locked loops, counter-timers, real-time timers, or power-on reset generators, voltage regulators, power management circuits, or DMA controllers. Individual units may further be connected by buses such as AMBA buses or be integrated in an Internet of Things or Industry 4.0 type network.

The evaluation device and/or the data processing device may be connected by or have further external interfaces or ports such as one or more of serial or parallel interfaces or ports, USB, Centronics Port, FireWire, HDMI, Ethernet, Bluetooth, RFID, Wi-Fi, USART, or SPI, or analogue interfaces or ports such as one or more of ADCs or DACs, or standardized interfaces or ports to further devices such as a 2D-camera device using an RGB-interface such as CameraLink. The evaluation device and/or the data processing device may further be connected by one or more of interprocessor interfaces or ports, FPGA-FPGA-interfaces, or serial or parallel interfaces ports. The evaluation device and the data processing device may further be connected to one or more of an optical disc drive, a CD-RW drive, a DVD+RW drive, a flash drive, a memory card, a disk drive, a hard disk drive, a solid state disk or a solid state hard disk.

The evaluation device and/or the data processing device may be connected by or have one or more further external connectors such as one or more of phone connectors, RCA connectors, VGA connectors, hermaphrodite connectors, USB connectors, HDMI connectors, 8P8C connectors, BCN connectors, IEC 60320 C14 connectors, optical fiber connectors, D-subminiature connectors, RF connectors, coaxial connectors, SCART connectors, XLR connectors, and/or may incorporate at least one suitable socket for one or more of these connectors.

The evaluation device is configured for determining at least one depth map of the area by determining at least one depth information for each of the reflection features. The term "each of the reflection features" may refer to each of the reflection features of the image or of a region of interest of the image. As used herein, the term "depth" may refer to a distance between the object and the optical sensor and may be given by the longitudinal coordinate. As used herein, the term "depth map" may refer to spatial distribution of depth. The evaluation device may be configured for determining the depth information for each of the reflection features by one or more of the following techniques: depth-from-photon-ratio, structured light, beam profile analysis, time-of-flight, shape-from-motion, depth-from-focus, triangulation, depth-from-defocus, stereo sensors. The evaluation device may be configured for considering the depth information for segmenting the object, in particular a hand region in the image, from the background in terms of the depth map.

In the following beam-profile analysis is described, in particular the so called depth-from-photon-ratio (DPR) technique. For further details, reference is made to WO 2018/091649 A1, WO 2018/091638 A1 and WO 2018/091640 A the full content of which is included by reference, which describe the beam-profile analysis in more detail, in particular determining of a combined signal and determining depth therefrom.

For example, the evaluation device may be configured for determining the depth information for each of the reflection features by using depth-from-photon-ratio technique. Each of the reflection features may comprise at least one beam profile, also denoted reflection beam profile. As used herein, the term "beam profile" of the reflection feature may generally refer to at least one intensity distribution of the reflection feature, such as of a light spot on the optical sensor, as a function of the pixel. The beam profile may be selected from the group consisting of a trapezoid beam profile; a triangle beam profile; a conical beam profile and a linear combination of Gaussian beam profiles. The evaluation device may be configured for determining depth information for each of the reflection features by analysis of their beam profiles.

The evaluation device may be configured for determining at least one longitudinal coordinate $Z_{DPR}$ for each of the reflection features by analysis of their beam profiles. As used herein, the term "analysis of the beam profile" may generally refer to evaluating of the beam profile and may comprise at least one mathematical operation and/or at least one comparison and/or at least symmetrizing and/or at least one filtering and/or at least one normalizing. For example, the analysis of the beam profile may comprise at least one of a histogram analysis step, a calculation of a difference measure, application of a neural network, application of a machine learning algorithm. The evaluation device may be configured for symmetrizing and/or for normalizing and/or for filtering the beam profile, in particular to remove noise or asymmetries from recording under larger angles, recording edges or the like. The evaluation device may filter the beam profile by removing high spatial frequencies such as by spatial frequency analysis and/or median filtering or the like. Summarization may be performed by center of intensity of the light spot and averaging all intensities at the same distance to the center. The evaluation device may be configured for normalizing the beam profile to a maximum intensity, in particular to account for intensity differences due to the recorded distance. The evaluation device may be configured for removing influences from background light from the beam profile, for example, by an imaging without illumination.

The reflection feature may cover or may extend over at least one pixel of the image. For example, the reflection feature may cover or may extend over plurality of pixels. The evaluation device may be configured for determining and/or for selecting all pixels connected to and/or belonging to the reflection feature, e.g. a light spot. The evaluation device may be configured for determining the center of intensity by

$$R_{coi} = \frac{1}{l \cdot \sum j \cdot r_{pixel}},$$

wherein $R_{coi}$ is a position of center of intensity, $r_{pixel}$ is the pixel position and $l = \sum_j I_{total}$ with j being the number of pixels j connected to and/or belonging to the reflection feature and $I_{total}$ being the total intensity.

The evaluation device may be configured for determining the longitudinal coordinate $Z_{DPR}$ for each of the reflection features by using depth-from-photon-ratio technique. With respect to depth-from-photon-ratio (DPR) technique reference is made to WO 2018/091649 A1, WO 2018/091638 A1 and WO 2018/091640 A1, the full content of which is included by reference.

The evaluation device may be configured for determining the beam profile of each of the reflection features. As used herein, the term "determining the beam profile" refers to identifying at least one reflection feature provided by the optical sensor and/or selecting at least one reflection feature provided by the optical sensor and evaluating at least one intensity distribution of the reflection feature. As an example, a region of the matrix may be used and evaluated for determining the intensity distribution, such as a three-dimensional intensity distribution or a two-dimensional intensity distribution, such as along an axis or line through the matrix. As an example, a center of illumination by the light beam may be determined, such as by determining the at least one pixel having the highest illumination, and a cross-sectional axis may be chosen through the center of illumination. The intensity distribution may an intensity distribution as a function of a coordinate along this cross-sectional axis through the center of illumination. Other evaluation algorithms are feasible.

The depth-from-photon-ratio technique may comprise determining at least one first area and at least one second area of the reflection beam profile of each of the reflection features and/or of the reflection features in at least one region of interest. The depth-from-photon-ratio technique may further comprise integrating the first area and the second area. The depth-from-photon-ratio technique may further comprise deriving a quotient Q by one or more of dividing the integrated first area and the integrated second area, dividing multiples of the integrated first area and the integrated second area, dividing linear combinations of the integrated first area and the integrated second area.

The evaluation device may be configured for determining at least one first area and at least one second area of the reflection beam profile of each of the reflection features and/or of the reflection features in at least one region of interest. The evaluation device is configured for integrating the first area and the second area.

The analysis of the beam profile of one of the reflection features may comprise determining at least one first area and at least one second area of the beam profile. The first area of the beam profile may be an area A1 and the second area of the beam profile may be an area A2. The evaluation device may be configured for integrating the first area and the second area. The evaluation device may be configured to derive a combined signal, in particular a quotient Q, by one or more of dividing the integrated first area and the integrated second area, dividing multiples of the integrated first area and the integrated second area, dividing linear combinations of the integrated first area and the integrated second area. The evaluation device may configured for determining at least two areas of the beam profile and/or to segment the beam profile in at least two segments comprising different areas of the beam profile, wherein overlapping of the areas may be possible as long as the areas are not congruent. For example, the evaluation device may be configured for determining a plurality of areas such as two, three, four, five, or up to ten areas. The evaluation device may be configured for segmenting the light spot into at least two areas of the beam profile and/or to segment the beam profile in at least two segments comprising different areas of the beam profile. The evaluation device may be configured for determining for at least two of the areas an integral of the beam profile over the respective area. The evaluation device may be configured for comparing at least two of the determined integrals. Specifically, the evaluation device may be configured for determining at least one first area and at least one second area of the beam profile. As used herein, the term "area of the beam profile" generally refers to an arbitrary region of the beam profile at the position of the optical sensor used for determining the quotient Q. The first area of the beam profile and the second area of the beam profile may be one or both of adjacent or overlapping regions. The first area of the beam profile and the second area of the beam profile may be not congruent in area. For example, the evaluation device may be configured for dividing a sensor region of the CMOS sensor into at least two sub-regions, wherein the evaluation device may be configured for dividing the sensor region of the CMOS sensor into at least one left part and at least one right part and/or at least one upper part and at least one lower part and/or at least one inner and at least one outer part. Additionally or alternatively, the detector may comprise at least two optical sensors, wherein the light-sensitive areas of a first optical sensor and of a second optical sensor may be arranged such that the first optical sensor is adapted to determine the first area of the beam profile of the reflection feature and that the second optical sensor is adapted to determine the second area of the beam profile of the reflection feature. The evaluation device may be adapted to integrate the first area and the second area. The evaluation device may be configured for using at least one predetermined relationship between the quotient Q and the longitudinal coordinate for determining the longitudinal coordinate. The predetermined relationship may be one or more of an empiric relationship, a semi-empiric relationship and an analytically derived relationship. The evaluation device may comprise at least one data storage device for storing the predetermined relationship, such as a lookup list or a lookup table.

The first area of the beam profile may comprise essentially edge information of the beam profile and the second area of the beam profile comprises essentially center information of the beam profile, and/or the first area of the beam profile may comprise essentially information about a left part of the beam profile and the second area of the beam profile comprises essentially information about a right part of the beam profile. The beam profile may have a center, i.e. a maximum value of the beam profile and/or a center point of a plateau of the beam profile and/or a geometrical center of the light spot, and falling edges extending from the center. The second region may comprise inner regions of the cross section and the first region may comprise outer regions of the cross section. As used herein, the term "essentially center information" generally refers to a low proportion of edge information, i.e. proportion of the intensity distribution corresponding to edges, compared to a proportion of the center information, i.e. proportion of the intensity distribution corresponding to the center. Preferably, the center information has a proportion of edge information of less than 10%, more preferably of less than 5%, most preferably the center information comprises no edge content. As used herein, the term "essentially edge information" generally refers to a low proportion of center information compared to a proportion of the edge information. The edge information may comprise information of the whole beam profile, in particular from center and edge regions. The edge information may have a proportion of center information of less than 10%, preferably of less than 5%, more preferably the edge information comprises no center content. At least one area of the beam profile may be determined and/or selected as second area of the beam profile if it is close or around the center and comprises essentially center information. At least one area of the beam profile may be determined and/or selected as first area of the beam profile if it comprises at least parts of the falling edges of the cross section. For example, the whole area of the cross section may be determined as first region.

Other selections of the first area A1 and second area A2 may be feasible. For example, the first area may comprise essentially outer regions of the beam profile and the second area may comprise essentially inner regions of the beam profile. For example, in case of a two-dimensional beam profile, the beam profile may be divided in a left part and a right part, wherein the first area may comprise essentially areas of the left part of the beam profile and the second area may comprise essentially areas of the right part of the beam profile.

The edge information may comprise information relating to a number of photons in the first area of the beam profile and the center information may comprise information relating to a number of photons in the second area of the beam profile. The evaluation device may be configured for determining an area integral of the beam profile. The evaluation device may be configured for determining the edge information by integrating and/or summing of the first area. The evaluation device may be configured for determining the center information by integrating and/or summing of the second area. For example, the beam profile may be a trapezoid beam profile and the evaluation device may be configured for determining an integral of the trapezoid. Further, when trapezoid beam profiles may be assumed, the determination of edge and center signals may be replaced by equivalent evaluations making use of properties of the trapezoid beam profile such as determination of the slope and position of the edges and of the height of the central plateau and deriving edge and center signals by geometric considerations.

In one embodiment, A1 may correspond to a full or complete area of a feature point on the optical sensor. A2 may be a central area of the feature point on the optical sensor. The central area may be a constant value. The central area may be smaller compared to the full area of the feature point. For example, in case of a circular feature point, the central area may have a radius from 0.1 to 0.9 of a full radius of the feature point, preferably from 0.4 to 0.6 of the full radius.

In one embodiment, the illumination pattern may comprise at least one line pattern. A1 may correspond to an area with a full line width of the line pattern on the optical sensors, in particular on the light sensitive area of the optical sensors. The line pattern on the optical sensor may be widened and/or displaced compared to the line pattern of the illumination pattern such that the line width on the optical sensors is increased. In particular, in case of a matrix of optical sensors, the line width of the line pattern on the optical sensors may change from one column to another column. A2 may be a central area of the line pattern on the optical sensor. The line width of the central area may be a constant value, and may in particular correspond to the line width in the illumination pattern. The central area may have a smaller line width compared to the full line width. For example, the central area may have a line width from 0.1 to 0.9 of the full line width, preferably from 0.4 to 0.6 of the full line width. The line pattern may be segmented on the optical sensors. Each column of the matrix of optical sensors may comprise center information of intensity in the central area of the line pattern and edge information of intensity from regions extending further outwards from the central area to edge regions of the line pattern.

In one embodiment, the illumination pattern may comprise at least point pattern. A1 may correspond to an area with a full radius of a point of the point pattern on the optical sensors. A2 may be a central area of the point in the point pattern on the optical sensors. The central area may be a constant value. The central area may have a radius compared to the full radius. For example, the central area may have a radius from 0.1 to 0.9 of the full radius, preferably from 0.4 to 0.6 of the full radius.

The illumination pattern may comprise both at least one point pattern and at least one line pattern. Other embodiments in addition or alternatively to line pattern and point pattern are feasible.

The evaluation device may be configured to derive a quotient Q by one or more of dividing the integrated first area and the integrated second area, dividing multiples of the integrated first area and the integrated second area, dividing linear combinations of the integrated first area and the integrated second area.

The evaluation device may be configured to derive the quotient Q by one or more of dividing the first area and the second area, dividing multiples of the first area and the second area, dividing linear combinations of the first area and the second area. The evaluation device may be configured for deriving the quotient Q by

$$Q = \frac{\iint_{A1} E(x,y)dxdy}{\iint_{A2} E(x,y)\,dxdy}$$

wherein x and y are transversal coordinates, A1 and A2 are the first and second area of the beam profile, respectively, and E(x,y) denotes the beam profile.

Additionally or alternatively, the evaluation device may be adapted to determine one or both of center information or edge information from at least one slice or cut of the light spot. This may be realized, for example, by replacing the area integrals in the quotient Q by a line integral along the slice or cut. For improved accuracy, several slices or cuts through the light spot may be used and averaged. In case of an elliptical spot profile, averaging over several slices or cuts may result in improved distance information.

For example, in case of the optical sensor having a matrix of pixels, the evaluation device may be configured for evaluating the beam profile, by

- determining the pixel having the highest sensor signal and forming at least one center signal;
- evaluating sensor signals of the matrix and forming at least one sum signal;
- determining the quotient Q by combining the center signal and the sum signal; and
- determining at least one longitudinal coordinate z of the object by evaluating the quotient Q.

As used herein, a "sensor signal" generally refers to a signal generated by the optical sensor and/or at least one pixel of the optical sensor in response to illumination. Specifically, the sensor signal may be or may comprise at least one electrical signal, such as at least one analogue electrical signal and/or at least one digital electrical signal. More specifically, the sensor signal may be or may comprise at least one voltage signal and/or at least one current signal. More specifically, the sensor signal may comprise at least one photocurrent. Further, either raw sensor signals may be used, or the display device, the optical sensor or any other element may be adapted to process or preprocess the sensor signal, thereby generating secondary sensor signals, which may also be used as sensor signals, such as preprocessing by filtering or the like. The term "center signal" generally refers to the at least one sensor signal comprising essentially center information of the beam profile. As used herein, the term "highest sensor signal" refers to one or both of a local maximum or a maximum in a region of interest. For example, the center signal may be the signal of the pixel having the highest sensor signal out of the plurality of sensor signals generated by the pixels of the entire matrix or of a region of interest within the matrix, wherein the region of interest may be predetermined or determinable within an image generated by the pixels of the matrix. The center signal may arise from a single pixel or from a group of optical sensors, wherein, in the latter case, as an example, the sensor signals of the group of pixels may be added up, integrated or averaged, in order to determine the center signal. The group of pixels from which the center signal arises may be a group of neighboring pixels, such as pixels having less than a predetermined distance from the actual pixel having the highest sensor signal, or may be a group of pixels generating sensor signals being within a predetermined range from the highest sensor signal. The group of pixels from which the center signal arises may be chosen as large as possible in order to allow maximum dynamic range. The evaluation device may be adapted to determine the center signal by integration of the plurality of sensor signals, for example the plurality of pixels around the pixel having the highest sensor signal. For example, the beam profile may be a trapezoid beam profile and the evaluation device may be adapted to determine an integral of the trapezoid, in particular of a plateau of the trapezoid.

As outlined above, the center signal generally may be a single sensor signal, such as a sensor signal from the pixel in the center of the light spot, or may be a combination of a plurality of sensor signals, such as a combination of sensor signals arising from pixels in the center of the light spot, or a secondary sensor signal derived by processing a sensor signal derived by one or more of the aforementioned possibilities. The determination of the center signal may be performed electronically, since a comparison of sensor signals is fairly simply implemented by conventional electronics, or may be performed fully or partially by software. Specifically, the center signal may be selected from the group consisting of: the highest sensor signal; an average of a group of sensor signals being within a predetermined range of tolerance from the highest sensor signal; an average of sensor signals from a group of pixels containing the pixel having the highest sensor signal and a predetermined group of neighboring pixels; a sum of sensor signals from a group of pixels containing the pixel having the highest sensor signal and a predetermined group of neighboring pixels; a sum of a group of sensor signals being within a predetermined range of tolerance from the highest sensor signal; an average of a group of sensor signals being above a predetermined threshold; a sum of a group of sensor signals being above a predetermined threshold; an integral of sensor signals from a group of optical sensors containing the optical sensor having the highest sensor signal and a predetermined group of neighboring pixels; an integral of a group of sensor signals being within a predetermined range of tolerance from the highest sensor signal; an integral of a group of sensor signals being above a predetermined threshold.

Similarly, the term "sum signal" generally refers to a signal comprising essentially edge information of the beam profile. For example, the sum signal may be derived by adding up the sensor signals, integrating over the sensor signals or averaging over the sensor signals of the entire matrix or of a region of interest within the matrix, wherein the region of interest may be predetermined or determinable within an image generated by the optical sensors of the matrix. When adding up, integrating over or averaging over the sensor signals, the actual optical sensors from which the sensor signal is generated may be left out of the adding, integration or averaging or, alternatively, may be included into the adding, integration or averaging. The evaluation device may be adapted to determine the sum signal by integrating signals of the entire matrix, or of the region of interest within the matrix. For example, the beam profile may be a trapezoid beam profile and the evaluation device may be adapted to determine an integral of the entire trapezoid. Further, when trapezoid beam profiles may be assumed, the determination of edge and center signals may be replaced by equivalent evaluations making use of properties of the trapezoid beam profile such as determination of the slope and position of the edges and of the height of the central plateau and deriving edge and center signals by geometric considerations.

Similarly, the center signal and edge signal may also be determined by using segments of the beam profile such as circular segments of the beam profile. For example, the beam profile may be divided into two segments by a secant or a chord that does not pass the center of the beam profile. Thus, one segment will essentially contain edge information, while the other segment will contain essentially center information. For example, to further reduce the amount of edge information in the center signal, the edge signal may further be subtracted from the center signal.

The quotient Q may be a signal which is generated by combining the center signal and the sum signal. Specifically, the determining may include one or more of: forming a quotient of the center signal and the sum signal or vice versa; forming a quotient of a multiple of the center signal and a multiple of the sum signal or vice versa; forming a quotient of a linear combination of the center signal and a linear combination of the sum signal or vice versa. Additionally or alternatively, the quotient Q may comprise an arbitrary signal or signal combination which contains at least one item of information on a comparison between the center signal and the sum signal.

As used herein, the term "longitudinal coordinate of the object" refers to a distance between the optical sensor and the object. The evaluation device may be configured for using the at least one predetermined relationship between the quotient Q and the longitudinal coordinate for determining the longitudinal coordinate. The predetermined relationship may be one or more of an empiric relationship, a semi-empiric relationship and an analytically derived relationship. The evaluation device may comprise at least one data storage device for storing the predetermined relationship, such as a lookup list or a lookup table.

The evaluation device may be configured for executing at least one depth-from-photon-ratio algorithm which computes distances for all reflection features with zero order and higher order.

The evaluation of the image comprises identifying the reflection features of the image. The evaluation device may be configured for performing at least one image analysis and/or image processing in order to identify the reflection features. The image analysis and/or image processing may use at least one feature detection algorithm. The image analysis and/or image processing may comprise one or more of the following: a filtering; a selection of at least one region of interest; a formation of a difference image between an image created by the sensor signals and at least one offset; an inversion of sensor signals by inverting an image created by the sensor signals; a formation of a difference image between an image created by the sensor signals at different times; a background correction; a decomposition into color channels; a decomposition into hue; saturation; and brightness channels; a frequency decomposition; a singular value decomposition; applying a blob detector; applying a corner detector; applying a Determinant of Hessian filter; applying a principle curvature-based region detector; applying a maximally stable extremal regions detector; applying a generalized Hough-transformation; applying a ridge detector; applying an affine invariant feature detector; applying an affine-adapted interest point operator; applying a Harris affine region detector; applying a Hessian affine region detector; applying a scale-invariant feature transform; applying a scale-space extrema detector; applying a local feature detector; applying speeded up robust features algorithm; applying a gradient location and orientation histogram algorithm; applying a histogram of oriented gradients descriptor; applying a Deriche edge detector; applying a differential edge detector; applying a spatio-temporal interest point detector; applying a Moravec corner detector; applying a Canny edge detector; applying a Laplacian of Gaussian filter; applying a Difference of Gaussian filter; applying a Sobel operator; applying a Laplace operator; applying a Scharr operator; applying a Prewitt operator; applying a Roberts operator; applying a Kirsch operator;

applying a high-pass filter; applying a low-pass filter; applying a Fourier transformation; applying a Radon-transformation; applying a Hough-transformation; applying a wavelet-transformation; a thresholding; creating a binary image. The region of interest may be determined manually by a user or may be determined automatically, such as by recognizing a feature within the image generated by the optical sensor.

For example, the illumination source may be configured for generating and/or projecting a cloud of points such that a plurality of illuminated regions is generated on the optical sensor, for example the CMOS detector. Additionally, disturbances may be present on the optical sensor such as disturbances due to speckles and/or extraneous light and/or multiple reflections. The evaluation device may be adapted to determine at least one region of interest, for example one or more pixels illuminated by the light beam which are used for determination of the longitudinal coordinate of the object. For example, the evaluation device may be adapted to perform a filtering method, for example, a blob-analysis and/or an edge filter and/or object recognition method.

The evaluation device may be configured for performing at least one image correction. The image correction may comprise at least one background subtraction. The evaluation device may be adapted to remove influences from background light from the beam profile, for example, by an imaging without further illumination.

The evaluation device is configured for finding the object by identifying the reflection features which were generated by illuminating biological tissue. The evaluation device is configured for determining the at least one reflection beam profile of each of the reflection features. The evaluation device is configured for identifying a reflection feature as to be generated by illuminating biological tissue in case its reflection beam profile fulfills at least one predetermined or predefined criterion. The evaluation device is configured for identifying the reflection feature as to be background otherwise.

As used herein, the term "biological tissue" generally refers to biological material comprising living cells. The detector may be a device for detection, in particular optical detection, of biological tissue, in particular of human skin. The term "identification" of being generated by biological tissue may refer to determining and/or validating whether a surface to be examined or under test is or comprises biological tissue, in particular human skin, and/or to distinguish biological tissue, in particular human skin, from other tissues, in particular other surfaces, and/or distinguishing different types of biological tissue such as distinguishing different types of human tissue e.g. muscle, fat, organs, or the like. For example, the biological tissue may be or may comprise human tissue or parts thereof such as skin, hair, muscle, fat, organs, or the like. For example, the biological tissue may be or may comprise animal tissue or a part thereof such as skin, fur, muscle, fat, organs, or the like. For example, the biological tissue may be or may comprise plant tissue or a part thereof. The detector may be adapted to distinguish animal tissue or parts thereof from one or more of inorganic tissue, metal surfaces, plastics surfaces, for example of farming machines or milking machines. The detector may be adapted to distinguish plant tissue or parts thereof from one or more of inorganic tissue, metal surfaces, plastics surfaces, for example of farming machines. The detector may be adapted to distinguish food and/or beverage from dish and/or glasses. The detector may be adapted to distinguish different types of food such as a fruit, meat, and fish. The detector may be adapted to distinguish a cosmetics product and/or, an applied cosmetics product from human skin. The detector may be adapted to distinguish human skin from foam, paper, wood, a display, a screen. The detector may be adapted to distinguish human skin from cloth. The detector may be adapted to distinguish a maintenance product from material of machine components such metal components etc. The detector may be adapted to distinguish organic material from inorganic material. The detector may be adapted to distinguish human biological tissue from surfaces of artificial or non-living objects. The detector may be used, in particular, for non-therapeutic and non-diagnostic applications.

As used herein, the term "at least one predetermined or predefined criterion" refers to at least one property and/or value suitable to distinguish biological tissue, in particular human skin, from other materials. The predetermined or predefined criterion may be or may comprise at least one predetermined or predefined value and/or threshold and/or threshold range referring to a material property. The reflection feature may be indicated as to be generated by biological tissue in case the reflection beam profile fulfills at least one predetermined or predefined criterion. As used herein, the term "indicate" refers to an arbitrary indication such as an electronic signal and/or at least one visual or acoustic indication.

The evaluation device may be configured for determining at least one material property m of the object by evaluating the beam profile of the reflection feature. As used herein, the term "material property" refers to at least one arbitrary property of the material configured for characterizing and/or identification and/or classification of the material. For example, the material property may be a property selected from the group consisting of: roughness, penetration depth of light into the material, a property characterizing the material as biological or non-biological material, a reflectivity, a specular reflectivity, a diffuse reflectivity, a surface property, a measure for translucence, a scattering, specifically a back-scattering behavior or the like. The at least one material property may be a property selected from the group consisting of: a scattering coefficient, a translucency, a transparency, a deviation from a Lambertian surface reflection, a speckle, and the like. As used herein, the term "identifying at least one material property" refers to one or more of determining and assigning the material property to the object. The detector may comprise at least one database comprising a list and/or table, such as a lookup list or a lookup table, of predefined and/or predetermined material properties. The list and/or table of material properties may be determined and/or generated by performing at least one test measurement using the detector according to the present invention, for example by performing material tests using samples having known material properties. The list and/or table of material properties may be determined and/or generated at the manufacturer site and/or by the user of the detector. The material property may additionally be assigned to a material classifier such as one or more of a material name, a material group such as biological or non-biological material, translucent or non-translucent materials, metal or non-metal, skin or non-skin, fur or non-fur, carpet or non-carpet, reflective or non-reflective, specular reflective or non-specular reflective, foam or non-foam, hair or non-hair, roughness groups or the like. The detector may comprise at least one database comprising a list and/or table comprising the material properties and associated material name and/or material group.

For example, without wishing to be bound by this theory, human skin may have a reflection profile, also denoted back scattering profile, comprising parts generated by back reflection of the surface, denoted as surface reflection, and parts generated by very diffuse reflection from light penetrating the skin, denoted as diffuse part of the back reflection. With respect to reflection profile of human skin reference is made to "Lasertechnik in der Medizin: Grundlagen, Systeme, Anwendungen", "Wirkung von Laserstrahlung auf Gewebe", 1991, pages 10 171 to 266, Jürgen Eichler, Theo Seiler, Springer Verlag, ISBN 0939-0979. The surface reflection of the skin may increase with the wavelength increasing towards the near infrared. Further, the penetration depth may increase with increasing wavelength from visible to near infrared. The diffuse part of the back reflection may increase with penetrating depth of the light. These properties may be used to distinguish skin from other materials, by analyzing the back scattering profile.

Specifically, the evaluation device may be configured for comparing the reflection beam profile with at least one predetermined and/or prerecorded and/or predefined beam profile. The predetermined and/or prerecorded and/or predefined beam profile may be stored in a table or a lookup table and may be determined e.g. empirically, and may, as an example, be stored in at least one data storage device of the detector. For example, the predetermined and/or prerecorded and/or predefined beam profile may be determined during initial start-up of a mobile device comprising the detector. For example, the predetermined and/or prerecorded and/or predefined beam profile may be stored in at least one data storage device of the mobile device, e.g. by software, specifically by the app downloaded from an app store or the like. The reflection feature may be identified as to be generated by biological tissue in case the reflection beam profile and the predetermined and/or prerecorded and/or predefined beam profile are identical. The comparison may comprise overlaying the reflection beam profile and the predetermined or predefined beam profile such that their centers of intensity match. The comparison may comprise determining a deviation, e.g. a sum of squared point to point distances, between the reflection beam profile and the predetermined and/or prerecorded and/or predefined beam profile. The evaluation device may be adapted to compare the determined deviation with at least one threshold, wherein in case the determined deviation is below and/or equal the threshold the surface is indicated as biological tissue and/or the detection of biological tissue is confirmed. The threshold value may be stored in a table or a lookup table and may be determined e.g. empirically and may, as an example, be stored in at least one data storage device of the detector.

Additionally or alternatively, for identification if the reflection feature was generated by biological tissue, the evaluation device may be configured for applying at least one image filter to the image of the area. As further used herein, the term "image" refers to a two-dimensional function, $f(x,y)$, wherein brightness and/or color values are given for any $x,y$-position in the image. The position may be discretized corresponding to the recording pixels. The brightness and/or color may be discretized corresponding to a bit-depth of the optical sensors. As used herein, the term "image filter" refers to at least one mathematical operation applied to the beam profile and/or to the at least one specific region of the beam profile. Specifically, the image filter $\Phi$ maps an image $f$, or a region of interest in the image, onto a real number, $\Phi(f(x,y)) = \varphi$, wherein $\varphi$ denotes a feature, in particular a material feature. Images may be subject to noise and the same holds true for features. Therefore, features may be random variables. The features may be normally distributed. If features are not normally distributed, they may be transformed to be normally distributed such as by a Box-Cox-Transformation.

The evaluation device may be configured for determining at least one material feature $\varphi_{2m}$ by applying at least one material dependent image filter $\Phi_2$ to the image. As used herein, the term "material dependent" image filter refers to an image having a material dependent output. The output of the material dependent image filter is denoted herein "material feature $\varphi_{2m}$" or "material dependent feature $\varphi_{2m}$". The material feature may be or may comprise at least one information about the at least one material property of the surface of the area having generated the reflection feature.

The material dependent image filter may be at least one filter selected from the group consisting of: a luminance filter; a spot shape filter; a squared norm gradient; a standard deviation; a smoothness filter such as a Gaussian filter or median filter; a grey-level-occurrence-based contrast filter; a grey-level-occurrence-based energy filter; a grey-level-occurrence-based homogeneity filter; a grey-level-occurrence-based dissimilarity filter; a Law's energy filter; a threshold area filter; or a linear combination thereof; or a further material dependent image filter $\Phi_{2other}$ which correlates to one or more of the luminance filter, the spot shape filter, the squared norm gradient, the standard deviation, the smoothness filter, the grey-level-occurrence-based energy filter, the grey-level-occurrence-based homogeneity filter, the grey-level-occurrence-based dissimilarity filter, the Law's energy filter, or the threshold area filter, or a linear combination thereof by $|\rho_{\Phi2other,\Phi m}| \geq 0.40$ with $\Phi_m$ being one of the luminance filter, the spot shape filter, the squared norm gradient, the standard deviation, the smoothness filter, the grey-level-occurrence-based energy filter, the grey-level-occurrence-based homogeneity filter, the grey-level-occurrence-based dissimilarity filter, the Law's energy filter, or the threshold area filter, or a linear combination thereof. The further material dependent image filter $\Phi_{2other}$ may correlate to one or more of the material dependent image filters $\Phi_m$ by $|\rho_{\Phi2other,\Phi m}| \geq 0.60$, preferably by $|\rho_{\Phi2other,\Phi m}| \geq 0.80$.

The material dependent image filter may be at least one arbitrary filter $\Phi$ that passes a hypothesis testing. As used herein, the term "passes a hypothesis testing" refers to the fact that a Null-hypothesis $H_0$ is rejected and an alternative hypothesis $H_1$ is accepted. The hypothesis testing may comprise testing the material dependency of the image filter by applying the image filter to a predefined data set. The data set may comprise a plurality of beam profile images. As used herein, the term "beam profile image" refers to a sum of $N_B$ Gaussian radial basis functions,

$$f_k(x, y) = \left| \sum_{l=0}^{N_B - 1} g_{lk}(x, y) \right|,$$

$$g_{lk}(x, y) = a_{lk} e^{-(\alpha(x - x_{lk}))^2} e^{-(\alpha(y - y_{lk}))^2}$$

wherein each of the $N_B$ Gaussian radial basis functions is defined by a center $(x_{lk}, y_{lx})$, a prefactor, $a_{lk}$, and an exponential factor $\alpha = 1/\varepsilon$. The exponential factor is identical for all Gaussian functions in all images. The center-positions, $x_{lk}, y_{lk}$, are identical for all images $f_k$: $(x_0, x_1, \cdots, x_{N_B-1}), (y_0, y_1, \cdots, Y_{N_B-1})$. Each of the beam profile images in the dataset may correspond to a material classifier and a distance. The material classifier may be a label such as 'Material A', 'Material B', etc. The beam profile images may be generated by using the above formula for $f_k(x, y)$ in combination with the following parameter table:

Table 1

| Image Index | Material classifier, Material Index | Distance z | Parameters |
|---|---|---|---|
| $k = 0$ | Skin, $m = 0$ | 0.4 m | $(a_{00}, a_{10}, \cdots, a_{N_B-10})$ |
| $k = 1$ | Skin, $m = 0$ | 0.6 m | $(a_{01}, a_{11}, \cdots, a_{N_B-11})$ |
| $k = 2$ | Fabric, $m = 1$ | 0.6 m | $(a_{02}, a_{12}, \cdots, a_{N_B-12})$ |
| $\vdots$ | | $\vdots$ | |
| $k = N$ | Material $J$, $m = J - 1$ | | $(a_{0N}, a_{1N}, \cdots, a_{N_B-1N})$ |

The values for $x, y$, are integers corresponding to pixels with $\binom{x}{y} \in [0, 1, \cdots 31]^2$. The images may have a pixel size of 32x32. The dataset of beam profile images may be generated by using the above formula for $f_k$ in combination with a parameter set to obtain a continuous description of $f_k$. The values for each pixel in the 32x32-image may be obtained by inserting integer values from 0, ..., 31 for $x, y$, in $f_k(x, y)$. For example, for pixel (6,9), the value $f_k(6,9)$ may be computed.

Subsequently, for each image $f_k$, the feature value $\varphi_k$ corresponding to the filter $\Phi$ may be calculated, $\Phi(f_k(x, y), z_k)$ $= \varphi_k$, wherein $z_k$ is a distance value corresponding to the image $f_k$ from the predefined data set. This yields a dataset with corresponding generated feature values $\varphi_k$. The hypothesis testing may use a Null-hypothesis that the filter does not distinguish between material classifier. The Null-Hypothesis may be given by $H_0$: $\mu_1 = \mu_2 = \cdots = \mu_J$ wherein $\mu_m$ is the expectation value of each material-group corresponding to the feature values $\varphi_k$. Index m denotes the material group. The hypothesis testing may use as alternative hypothesis that the filter does distinguish between at least two material classifiers. The alternative hypothesis may be given by $H_1$: $\exists$ m, m': $\mu_m \neq \mu_{m'}$. As used herein, the term "not distinguish between material classifiers" refers to that the expectation values of the material classifiers are identical. As used herein, the term "distinguishes material classifiers" refers to that at least two expectation values of the material classifiers differ. As used herein "distinguishes at least two material classifiers" is used synonymous to "suitable material classifier". The hypothesis testing may comprise at least one analysis of variance (ANOVA) on the generated feature values. In particular, the hypothesis testing may comprise determining a mean-value of the feature values for each of the $J$ materials, i.e. in total $J$ mean values, $\bar{\varphi}_m = \frac{\sum_i \varphi_{i,m}}{N_m}$, for $m \in [0, 1, \cdots, J - 1]$, wherein $N_m$ gives the number of feature values for each of the $J$ materials in the prede-fined data set. The hypothesis testing may comprise determining a mean-value of all $N$ feature values $\bar{\varphi} = \frac{\sum_m \sum_i \varphi_{i,m}}{N}$. The hypothesis testing may comprise determining a Mean Sum Squares within:

$$mssw = \left(\sum_m \sum_i \left(\varphi_{i,m} - \bar{\varphi}_m\right)^2\right)/(N-J).$$

The hypothesis testing may comprise determining a Mean Sum of Squares between,

$$mssb = \left(\sum_m (\bar{\varphi}_m - \bar{\varphi})^2 \, N_m\right)/(J-1).$$

The hypothesis testing may comprise performing an F-Test:

-

$\quad \circ \quad CDF(x) = I_{\frac{d_1 x}{d_1 x + d_2}}\left(\frac{d_1}{2}, \frac{d_2}{2}\right)$, where $d_1 = N - J, d_2 = J - 1,$

-

$\quad \circ \quad F(x) = 1 - CDF(x)$

-

$\quad \circ \quad p = F(mssb/mssw)$

Herein, $I_x$ is the regularized incomplete Beta-Function, $I_x(a, b) = \frac{B(x; a,b)}{B(a,b)}$, with the Euler Beta-Function $B(a, b)$ $= \int_0^1 t^{a-1}(1-t)^{b-1}dt$ and $B(x; a, b) = \int_0^x t^{a-1}(1-t)^{b-1}dt$ being the incomplete Beta-Function. The image filter may pass the hypothesis testing if a p-value, p, is smaller or equal than a pre-defined level of significance. The filter may pass the hypothesis testing if $p \leq 0.075$, preferably $p \leq 0.05$, more preferably $p \leq 0.025$, and most preferably $p \leq 0.01$. For example, in case the pre-defined level of significance is $\alpha = 0.075$, the image filter may pass the hypothesis testing if the p-value is smaller than $\alpha = 0.075$. In this case the Null-hypothesis $H_0$ can be rejected and the alternative hypothesis $H_1$ can be accepted. The image filter thus distinguishes at least two material classifiers. Thus, the image filter passes the hypothesis testing.

In the following, image filters are described assuming that the reflection image comprises at least one reflection feature, in particular a spot image. A spot image $f$ may be given by a function $f: \mathbb{R}^2 \to \mathbb{R}_{\geq 0}$, wherein the background of the image f may be already subtracted. However, other reflection features may be possible.

For example, the material dependent image filter may be a luminance filter. The luminance filter may return a luminance measure of a spot as material feature. The material feature may be determined by

$$\varphi_{2m} = \Phi(f, z) = -\int f(x)dx \, \frac{z^2}{d_{ray} \cdot n},$$

where f is the spot image. The distance of the spot is denoted by z, where z may be obtained for example by using a depth-from-defocus or depth-from-photon ratio technique and/or by using a triangulation technique. The surface normal of the material is given by $n \in \mathbb{R}^3$ and can be obtained as the normal of the surface spanned by at least three measured points.

The vector $d_{ray} \in \mathbb{R}^3$ is the direction vector of the light source. Since the position of the spot is known by using a depth-from-defocus or depth-from-photon ratio technique and/or by using a triangulation technique wherein the position of the light source is known as a parameter of the detector system, $d_{ray}$, is the difference vector between spot and light source positions.

For example, the material dependent image filter may be a filter having an output dependent on a spot shape. This material dependent image filter may return a value which correlates to the translucence of a material as material feature. The translucence of materials influences the shape of the spots. The material feature may be given by

$$\varphi_{2m} = \Phi(f) = \frac{\int H(f(x) - \alpha h)dx}{\int H(f(x) - \beta h)dx},$$

wherein $0 < \alpha, \beta < 1$ are weights for the spot height h, and H denotes the Heavyside function, i.e. $H(x) = 1 : x \geq 0$, $H(x) = 0 : x < 0$. The spot height h may be determined by

$$h = \int_{B_r} f(x)dx,$$

where $B_r$ is an inner circle of a spot with radius $r$.

For example, the material dependent image filter may be a squared norm gradient. This material dependent image filter may return a value which correlates to a measure of soft and hard transitions and/or roughness of a spot as material feature. The material feature may be defined by

$$\varphi_{2m} = \Phi(f) = \int \|\nabla f(x)\|^2 dx.$$

For example, the material dependent image filter may be a standard deviation. The standard deviation of the spot may be determined by

$$\varphi_{2m} = \Phi(f) = \int (f(x) - \mu)^2 dx,$$

Wherein $\mu$ is the mean value given by $\mu = \int (f(x))dx$.

For example, the material dependent image filter may be a smoothness filter such as a Gaussian filter or median filter. In one embodiment of the smoothness filter, this image filter may refer to the observation that volume scattering exhibits less speckle contrast compared to diffuse scattering materials. This image filter may quantify the smoothness of the spot corresponding to speckle contrast as material feature. The material feature may be determined by

$$\varphi_{2m} = \Phi(f,z) = \frac{\int |\mathcal{F}(f)(x) - f(x)|dx}{\int f(x)dx} \cdot \frac{1}{z},$$

wherein $\mathcal{F}$ is a smoothness function, for example a median filter or Gaussian filter. This image filter may comprise dividing by the distance z, as described in the formula above. The distance z may be determined for example using a depth-from-defocus or depth-from-photon ratio technique and/or by using a triangulation technique. This may allow the filter to be insensitive to distance. In one embodiment of the smoothness filter, the smoothness filter may be based on the standard deviation of an extracted speckle noise pattern. A speckle noise pattern $N$ can be described in an empirical way by

$$f(x) = f_0(x) \cdot (N(X) + 1),$$

where $f_0$ is an image of a despeckled spot. $N(X)$ is the noise term that models the speckle pattern. The computation of a despeckled image may be difficult. Thus, the despeckled image may be approximated with a smoothed version of f, i.e. $f_0 \approx \mathcal{F}(f)$, wherein $\mathcal{F}$ is a smoothness operator like a Gaussian filter or median filter. Thus, an approximation of the speckle pattern may be given by

$$N(X) = \frac{f(x)}{\mathcal{F}(f(x))} - 1.$$

The material feature of this filter may be determined by

$$\varphi_{2m} = \Phi(f) = \sqrt{Var\left(\frac{f}{\mathcal{F}(f)} - 1\right)},$$

Wherein Var denotes the variance function.
For example, the image filter may be a grey-level-occurrence-based contrast filter. This material filter may be based on the grey level occurrence matrix $M_{f,\rho}$ $(g_1 g_2)$ = $[p_{g1,g2}]$, whereas $p_{g1,g2}$ is the occurrence rate of the grey combination $(g_1,g_2)$=$[f(x_1,y_1),f(x_2,y_2)]$, and the relation $\rho$ defines the distance between $(x_1,y_1)$ and $(x_2,y_2)$, which is $\rho(x,y)$= (x+a,y+b) with a and b selected from 0,1.

The material feature of the grey-level-occurrence-based contrast filter may be given by

$$\varphi_{2m} = \Phi(f) = \sum_{i,j=0}^{N-1} p_{ij}(i-j)^2.$$

For example, the image filter may be a grey-level-occurrence-based energy filter. This material filter is based on the grey level occurrence matrix defined above.

The material feature of the grey-level-occurrence-based energy filter may be given by

$$\varphi_{2m} = \Phi(f) = \sum_{i,j=0}^{N-1} (p_{ij})^2.$$

For example, the image filter may be a grey-level-occurrence-based homogeneity filter. This material filter is based on the grey level occurrence matrix defined above.

The material feature of the grey-level-occurrence-based homogeneity filter may be given by

$$\varphi_{2m} = \Phi(f) = \sum_{i,j=0}^{N-1} \frac{p_{ij}}{1 + |i - j|}.$$

For example, the image filter may be a grey-level-occurrence-based dissimilarity filter. This material filter is based on the grey level occurrence matrix defined above.

The material feature of the grey-level-occurrence-based dissimilarity filter may be given by

$$\varphi_{2m} = \Phi(f) = -\sum_{i,j=0}^{N-1} \sqrt{p_{ij} log(p_{ij})}.$$

For example, the image filter may be a Law's energy filter. This material filter may be based on the laws vector $L_5$= [1,4,6,4,1] and $E_5$=[-1,-2,0,-2,-1] and the matrices $L_5(E_5)^T$ and $E_5(L_5)^T$.

The image $f_k$ is convoluted with these matrices:

$$f_{k,L5E5}^*(x,y) = \sum_{i-2}^{2}\sum_{j-2}^{2} f_k(x+i,y+j) L_5(E_5)^T$$

and

$$f_{k,E5L5}^*(x,y) = \sum_{i-2}^{2} \sum_{j-2}^{2} f_k(x+i,y+j) E_5(L_5)^T.$$

$$E = \int \frac{f_{k,L5E5}^*(x,y)}{max(f_{k,L5E5}^*(x,y))} dxdy,$$

$$F = \int \frac{f_{k,E5L5}^*(x,y)}{max(f_{k,E5L5}^*(x,y))} dxdy,$$

Whereas the material feature of Law's energy filter may be determined by

$$\varphi_{2m} = \Phi(f) = E/F.$$

For example, the material dependent image filter may be a threshold area filter. This material feature may relate two areas in the image plane. A first area $\Omega1$, may be an area wherein the function f is larger than $\alpha$ times the maximum of f. A second area $\Omega2$, may be an area wherein the function f is smaller than $\alpha$ times the maximum of f, but larger than a threshold value $\varepsilon$ times the maximum of f. Preferably $\alpha$ may be 0.5 and $\varepsilon$ may be 0.05. Due to speckles or noise, the areas may not simply correspond to an inner and an outer circle around the spot center. As an example, $\Omega1$ may comprise speckles or unconnected areas in the outer circle. The material feature may be determined by

$$\varphi_{2m} = \Phi(f) = \frac{\int_{\Omega1} 1}{\int_{\Omega2} 1},$$

wherein $\Omega1 = \{x| f(x) > \alpha \cdot max(f(x)))\}$ and $\Omega2 = \{x| \varepsilon \cdot max(f(x)) < f(x) < \alpha \cdot max(f(x))\}$.

The evaluation device may be configured for using at least one predetermined relationship between the material feature $\varphi_{2m}$ and the material property of the surface having generated the reflection feature for determining the material property of the surface having generated the reflection feature. The predetermined relationship may be one or more of an empirical relationship, a semi-empiric relationship and an analytically derived relationship. The evaluation device may comprise at least one data storage device for storing the predetermined relationship, such as a lookup list or a lookup table.

The evaluation device is configured for identifying a reflection feature as to be generated by illuminating biological tissue in case its corresponding material property fulfills the at least one predetermined or predefined criterion. The reflection feature may be identified as to be generated by biological tissue in case the material property indicates "biological tissue". The reflection feature may be identified as to be generated by biological tissue in case the material property is below or equal at least one threshold or range, wherein in case the determined deviation is below and/or equal the threshold the reflection feature is identified as to be generated by biological tissue and/or the detection of biological tissue is confirmed. At least one threshold value and/or range may be stored in a table or a lookup table and may be determined e.g. empirically and may, as an example, be stored in at least one data storage device of the detector. The evaluation device is configured for identifying the reflection feature as to be background otherwise. Thus, the evaluation device may be configured for assigning each projected spot with a depth information and a material property, e.g. skin yes or no.

**[0116]** The material property may be determined by evaluating $\varphi_{2m}$ subsequently after determining of the longitudinal coordinate z such that the information about the longitudinal coordinate z can be considered for evaluating of $\varphi_{2m}$.

The evaluation device is configured for segmenting the image of the area by using at least one segmentation algorithm. As used herein, the term "segment" may refer to a part of the image and/or a sub-part of the image and/or a region of the image. The segment may comprise a set of pixels. As used herein, the term "segmenting" may refer to a process of partitioning the image into multiple segments. The segmentation may comprise assigning at least one label to every pixel of the image such that pixels with the same label share at least one characteristic. The labels may be assigned under a pre-defined target. The segmentation may be a binary segmentation. The binary segmentation may comprise labeling the pixels of the image as "skin-pixels" and "background pixel". All non-skin pixels may be considered as background. Skin-pixels may be considered as foreground seeds, also denoted seed points, serving as input for an image-based segmentation algorithm. With respect to image segmenting reference is made to https://en.wikipedia.org/wiki/Image_segmentation. The segmentation algorithm may comprise at least one region growing image segmentation method.

The segmentation algorithm may be configured for fusioning and/or considering a-priory knowledge. Specifically, the segmentation algorithm may be configured for fusioning and/or considering the material information determined from the beam profile analysis. This may allow to obtain or filter position data for motions of visible skin only. In contrast, in conventional setups, a recognition and separation of e.g. what is a finger/arm and what is not, needs to be done first. In addition to using the material information, the evaluation device may be configured for considering the depth information for segmenting the object, in particular a hand region in the image, from the background in terms of the depth map.

The segmentation algorithm may be based on energy or cost functions such as one or more of graph cut, level-set, fast marching and Markov random field approaches. Segmentation of the image may be driven by color homogeneity and edge indicators, wherein the seed points constitute edge- and color homogeneity criterions. As used herein, the term "seed point" may refer to starting points for the segmentation algorithm. The reflection features identified as to be generated by illuminating biological tissue are used as seed points and the reflection features identified as background are used as background seed points for the segmentation algorithm. These seed points may constitute, edge- and color homogeneity criterions, and thus provide an appropriate initialization of the segmentation of the target: "Which color and/or reflection and/or appearance has the skin in the image?".

For example, graph cut segmentation may be used. Graph cut segmentation may be configured for fusioning the a-priory knowledge as it additionally provides real-time capability when combining it with pre-clustering algorithms such as superpixels, see R. Achanta, A. Shaji, K. Smith, A. Lucchi, P. Fua, and S. Süsstrunk, "Slic superpixels compared to state-of-the-art superpixel methods," IEEE TPAMI, vol. 34, no. 11, 2012. For example, a modified lazy snapping graph cut may be used. With respect to modified lazy snapping graph cut reference is made to Li, Yin and Sun, Jian and Tang, Chi-Keung and Shum, Heung-Yeung, "Lazy Snapping", ACM Trans. Graph., vol. 23, no. 3, 2004. The Gibbs energy term may comprise an additional term to incorporate depth information for the graph cut segmentation routine. Instead of watershed-based pre-segmentation as proposed in Li, Yin and Sun, Jian and Tang, Chi-Keung and Shum, Heung-Yeung, "Lazy Snapping", ACM Trans, a superpixel clustering may be used to ensure real-time capability.

The evaluation device is configured for determining position and/or orientation of the object in space considering the segmented image and the depth map. As used herein, the term "segmented image" may refer to the image after the segmentation process and/or an outcome of the segmentation algorithm. As used herein, the term "position" refers to at least one item of information regarding a location and/or orientation of the object and/or at least one part of the object in space. The distance may be a longitudinal coordinate or may contribute to determining a longitudinal coordinate of the point of the object. Additionally or alternatively, one or more other items of information regarding the location and/or orientation of the object and/or at least one part of the object may be determined. As an example, additionally, at least one transversal coordinate of the object and/or at least one part of the object may be determined. Thus, the position of the object may imply at least one longitudinal coordinate of the object and/or at least one part of the object. Additionally or alternatively, the position of the object may imply at least one transversal coordinate of the object and/or at least one part of the object. Additionally or alternatively, the position of the object may imply at least one orientation information of the object, indicating an orientation of the object in space.

The evaluation device may be configured for determining at least one hand pose or gesture from the position and/or the orientation of the object in space. The evaluation device may be configured for recognition of gestures from the segmented image, in particular from the parts of the segmented image labeled as object. The evaluation device may be configured for identifying image coordinates of palm and finger in the segmented image. Palm and finger identification may be obtained from the segmentation. The evaluation device may be configured for extracting features such as color and/or brightness and/or gradient values from the parts of the segmented image labeled as object. For example, palm and finger tips may be detected using standard OpenCV routines.

The evaluation device may be configured for determining at least one three-dimensional finger vector considering image coordinates of palm and finger tip and the depth map. As used herein, the term "three-dimensional finger vector" may refer to a 3D vector spanned by a point of a finger tip and a point of the palm. The 3D finger vector may specify the position and orientation of the finger in space. The evaluation device may be configured for determining the 3D finger vector from the image and depth map. The 3D finger vector may provide the basis for hand pose estimation and scene interpretation. For the recognition of hand gestures, the evaluation device may be configured for using at least one classifier such as a hidden Markov model (HMM), a support vector machine (SVM), a conditional random field (CRF) and the like. The classifier may be configured for discriminating hand gestures.

The use of the beam profile analysis sensor fusion concept according to the present invention have the advantages for providing robust detection results, no need for complex model assumptions, a single sensor concept, easy integration and real-time capability.

In a further aspect, the present invention discloses a method for gesture detection, wherein a detector according to the present invention is used. The method comprises the following steps:

a) projecting at least one illumination pattern comprising a plurality of illumination features on at least one area comprising at least one object, wherein the object comprises at least partially at least one human hand;

b) determining at least one image of the area using at least one optical sensor having at least one light-sensitive area, wherein the image comprises a plurality of reflection features generated by the area in response to illumination by the illumination features;

c) determining at least one depth map of the area by determining at least one depth information for each of the reflection features by using at least one evaluation device;

d) finding the object by using the evaluation device by identifying the reflection features which were generated by illuminating biological tissue, wherein at least one reflection beam profile of each of the reflection features is determined, wherein a reflection feature is identified as to be generated by illuminating biological tissue in case its reflection beam profile fulfills at least one predetermined or predefined criterion, wherein the reflection feature otherwise is identified as background;

e) segmenting the image of the area by using the evaluation device by using at least one segmentation algorithm, wherein the reflection features identified as to be generated by illuminating biological tissue are used as seed points and the reflection features identified as background are used as background seed points for the segmentation algorithm;

f) determining position and/or orientation of the object in space considering the segmented image and the depth map by using the evaluation device.

The method steps may be performed in the given order or may be performed in a different order. Further, one or more additional method steps may be present which are not listed. Further, one, more than one or even all of the method steps may be performed repeatedly. For details, options and definitions, reference may be made to the detector as discussed above. Thus, specifically, as outlined above, the method may comprise using the detector according to the present invention, such as according to one or more of the embodiments given above or given in further detail below.

The at least one evaluation device may be configured for performing at least one computer program, such as at least one computer program configured for performing or supporting one or more or even all of the method steps of the method according to the present invention. As an example, one or more algorithms may be implemented which may detect the gesture.

In a further aspect of the present invention, use of the detector according to the present invention, such as according to one or more of the embodiments given above or given in further detail below, is proposed, for a purpose of use, selected from the group consisting of: a position measurement in traffic technology; an entertainment application; a security application; a surveillance application; a safety application; a human-machine interface application; a tracking application; a photography application; an imaging application or camera application; a mapping application for generating maps of at least one space; a homing or tracking beacon detector for vehicles; an outdoor application; a mobile application; a communication application; a machine vision application; a robotics application; a quality control application; a manufacturing application.

With respect to further uses of the detector of the present invention reference is made to WO 2018/091649 A1, WO 2018/091638 A1 and WO 2018/091640 A1, the content of which is included by reference.

Overall, in the context of the present invention, the following embodiments are regarded as preferred:

Embodiment 1: Detector for gesture detection comprising

- at least one illumination source configured for projecting at least one illumination pattern comprising a plurality of illumination features on at least one area comprising at least one object, wherein the object comprises at least partially at least one human hand;
- at least one optical sensor having at least one light-sensitive area, wherein the optical sensor is configured for determining at least one image of the area, wherein the image comprises a plurality of reflection features generated by the area in response to illumination by the illumination features;
- at least one evaluation device, wherein the evaluation device is configured for determining at least one depth map of the area by determining at least one depth information for each of the reflection features,

wherein the evaluation device is configured for finding the object by identifying the reflection features which were generated by illuminating biological tissue, wherein the evaluation device is configured for determining at least one reflection beam profile of each of the reflection features, wherein the evaluation device is configured for identifying a reflection feature as to be generated by illuminating biological tissue in case its reflection beam profile fulfills at least one predetermined or predefined criterion, wherein the evaluation device is configured for identifying the reflection feature as to be background otherwise,
wherein the evaluation device is configured for segmenting the image of the area by using at least one segmentation algorithm, wherein the reflection features identified as to be generated by illuminating biological tissue are used as seed points and the reflection features identified as background are used as background seed points for the segmentation algorithm,
wherein the evaluation device is configured for determining position and/or orientation of the object in space considering the segmented image and the depth map.

Embodiment 2: The detector according to the preceding embodiment, wherein the evaluation device is configured for identifying image coordinates of palm and finger in the segmented image, wherein the evaluation device is configured for determining at least one three-dimensional finger vector considering image coordinates of palm and finger and the depth map.

Embodiment 3: The detector according to any one of the preceding embodiments, wherein the evaluation device is configured for determining at least one hand pose or gesture from the position and/or the orientation of the object in space.

Embodiment 4: The detector according to any one of the preceding embodiments, wherein the segmentation algorithm is based on energy or cost functions such as one or more of graph cut, level-set, fast marching and Markov random field approaches.

Embodiment 5: The detector according to any one of the preceding embodiments, wherein segmentation of the image is driven by color homogeneity and edge indicators, wherein the seed points constitute edge- and color homogeneity criterions.

Embodiment 6: The detector according to any one of the preceding embodiments, wherein the evaluation device is configured for comparing the reflection beam profile of each of the reflection features with at least one predetermined and/or prerecorded and/or predefined beam profile.

Embodiment 7: The detector according to the preceding embodiment, wherein the comparison comprises overlaying the reflection beam profile and the predetermined and/or prerecorded and/or predefined beam profile such that their centers of intensity match, wherein the comparison comprises determining a deviation between the reflection beam profile and the predetermined and/or prerecorded and/or predefined beam profile, wherein the evaluation device is configured for comparing the determined deviation with at least one threshold, wherein in case the determined deviation is below and/or equal the threshold the reflection feature is indicated as biological tissue.

Embodiment 8: The detector according to any one of the preceding embodiments, wherein the evaluation device is configured for determining the depth information for each of the reflection features by one or more of the following techniques: depth-from-photon-ratio, structured light, beam profile analysis, time-of-flight, shape-from-motion, depth-from-focus, triangulation, depth-from-defocus, stereo sensors.

Embodiment 9: The detector according to any one of the preceding embodiments, wherein the evaluation device is configured for determining the depth information for each of the reflection features by using depth-from-photon-ratio technique, wherein the evaluation device is configured for determining at least one first area and at least one second area of a beam profile of at least one of the reflection features, wherein the evaluation device is configured for integrating the first area and the second area, wherein the evaluation device is configured to derive a quotient Q by one or more of dividing the integrated first area and the integrated second area, dividing multiples of the integrated first area and the integrated second area, dividing linear combinations of the integrated first area and the integrated second area.

Embodiment 10: The detector according to the preceding embodiment, wherein the first area of the reflection beam profile comprises essentially edge information of the reflection beam profile and the second area of the reflection beam profile comprises essentially center information of the reflection beam profile, and/or wherein the first area of the reflection beam profile comprises essentially information about a left part of the reflection beam profile and the second area of the reflection beam profile comprises essentially information about a right part of the reflection beam profile.

Embodiment 11: The detector according to any one of the two preceding embodiments, wherein the evaluation device is configured for deriving the quotient Q by

$$Q = \frac{\iint_{A1} E(x,y)dxdy}{\iint_{A2} E(x,y)\,dxdy}$$

wherein x and y are transversal coordinates, A1 and A2 are the first and second area of the reflection beam profile, respectively, and E(x,y) denotes the reflection beam profile.

Embodiment 12: The detector according to any one of the preceding embodiments, wherein the illumination source is configured for generating the at least one illumination pattern in the near infrared region (NIR).

Embodiment 13: The detector according to any one of the preceding embodiments, wherein the optical sensor comprises at least one CMOS sensor.

Embodiment 14: Method for gesture detection, wherein at least one detector according to the preceding embodiments is used, wherein the method comprises the following steps:

a) projecting at least one illumination pattern comprising a plurality of illumination features on at least one area comprising at least one object, wherein the object comprises at least partially at least one human hand;

b) determining at least one image of the area using at least one optical sensor having at least one light-sensitive area, wherein the image comprises a plurality of reflection features generated by the area in response to illumination by the illumination features;

c) determining at least one depth map of the area by determining at least one depth information for each of the reflection features by using at least one evaluation device;

d) finding the object by using the evaluation device by identifying the reflection features which were generated by illuminating biological tissue, wherein at least one reflection beam profile of each of the reflection features is determined, wherein a reflection feature is identified as to be generated by illuminating biological tissue in case its reflection beam profile fulfills at least one predetermined or predefined criterion, wherein the reflection feature otherwise is identified as background;

e) segmenting the image of the area by using the evaluation device by using at least one segmentation algorithm, wherein the reflection features identified as to be generated by illuminating biological tissue are used as seed points and the reflection features identified as background are used as background seed points for the segmentation algorithm;

f) determining position and/or orientation of the object in space considering the segmented image and the depth map by using the evaluation device.

Embodiment 15: A use of the detector according to any one of the preceding embodiments relating to a detector, for a purpose of use, selected from the group consisting of: driver monitoring; in-cabin surveillance; gesture tracking; a security application; a safety application; a human-machine interface application; an information technology application; an agriculture application; a crop protection application; a medical application; a maintenance application; a cosmetics application.

Brief description of the figures

Further optional details and features of the invention are evident from the description of preferred exemplary embodiments which follows in conjunction with the dependent claims. In this context, the particular features may be implemented in an isolated fashion or in combination with other features. The invention is not restricted to the exemplary embodiments. The exemplary embodiments are shown schematically in the figures. Identical reference numerals in the individual figures refer to identical elements or elements with identical function, or elements which correspond to one another with regard to their functions.

Specifically, in the figures:

Figure 1            shows an embodiments of a detector according to the present invention; and

Figures 2A to 2C    show pose detection according to the present invention; and

Detailed description of the embodiments:

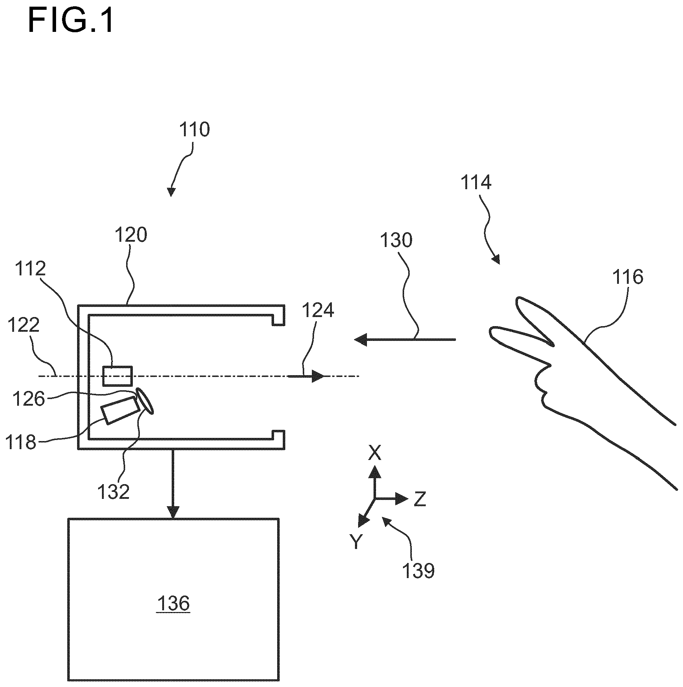

Fig. 1 shows in a highly schematic fashion an embodiment of a detector 110 for gesture detection. The gesture may comprise body gesture such as of at least one part of the body, in particular hand gesture. The gesture may be static or dynamic. The gesture may comprise movement of at least one part of a hand, such as of a finger, movement of one or both hands, face, or other parts of the body. The gesture detection may comprise determining presence or absence of a gesture and/or gesture recognition. The gesture recognition may comprise interpreting of human gestures via mathematical algorithms.

The detector 110 comprises at least one illumination source 112 configured for projecting at least one illumination pattern comprising a plurality of illumination features on at least one area 114 comprising at least one object 116. The object 116 comprises at least partially at least one human hand.

The illumination source 112 may be configured for providing the illumination pattern for illumination of the area 114. The illumination source 112 may be adapted to directly or indirectly illuminating the area 114, wherein the illumination pattern is reflected or scattered by surfaces of the area 114 and, thereby, is at least partially directed towards at least one optical sensor 118. The illumination source 112 may be configured for illuminating the area 114, for example, by directing a light beam towards the area 114, which reflects the light beam. The illumination source 112 may be configured for generating an illuminating light beam for illuminating the area 114.

The area may comprise the at least one object 116 and a surrounding environment. For example, the object may be at least one object selected from the group consisting of: a scene, a human such as a human, wood, carpet, foam, an animal such as a cow, a plant, a piece of tissue, a metal, a toy, a metallic object, a beverage, a food such as a fruit, meat, fish, a dish, a cosmetics product, an applied cosmetics product, cloth, fur, hair, a maintenance product, a plant, a body, a part of a body, organic material, inorganic material, a reflective material, a screen, a display, a wall, a sheet of paper, such as photograph. The object 116 may comprise at least one surface on which the illumination pattern is projected. The surface may be adapted to at least partially reflect the illumination pattern back towards the detector 110. The object 116 may, specifically, be a human body or at least one part of a human body such as at least one arm, at least one hand, at least one finger or a face. The object 116 comprises at least partially at least one human hand. The object 116 may be a human hand and/or at least one finger and/or at least one part of a palm.

The illumination source 112 may comprise at least one light source. The illumination source 112 may comprise a plurality of light sources. The illumination source 112 may comprise an artificial illumination source, in particular at least one laser source and/or at least one incandescent lamp and/or at least one semiconductor light source, for example, at least one light-emitting diode, in particular an organic and/or inorganic light-emitting diode. As an example, the light emitted by the illumination source may have a wavelength of 300 to 1100nm, especially 500 to 1100 nm. Additionally or alternatively, light in the infrared spectral range may be used, such as in the range of 780 nm to 3.0 $\mu$m. Specifically, the light in the part of the near infrared region where silicon photodiodes are applicable specifically in the range of 700 nm to 1100 nm may be used. The illumination source may be configured for generating the at least one illumination pattern in the infrared region. Using light in the near infrared region allows that light is not or only weakly detected by human eyes and is still detectable by silicon sensors, in particular standard silicon sensors.

The illumination source 112 may be configured for emitting light at a single wavelength. Specifically, the wavelength may be in the near infrared region. In other embodiments, the illumination source 112 may be configured for emitting light with a plurality of wavelengths allowing additional measurements in other wavelengths channels.

The illumination source 112 may be or may comprise at least one multiple beam light source. For example, the illumination source 112 may comprise at least one laser source and one or more diffractive optical elements (DOEs). Specifically, the illumination source 112 may comprise at least one laser and/or laser source. Various types of lasers may be employed, such as semiconductor lasers, double heterostructure lasers, external cavity lasers, separate confinement heterostructure lasers, quantum cascade lasers, distributed bragg reflector lasers, polariton lasers, hybrid silicon lasers, extended cavity diode lasers, quantum dot lasers, volume Bragg grating lasers, Indium Arsenide lasers, transistor lasers, diode pumped lasers, distributed feedback lasers, quantum well lasers, interband cascade lasers, Gallium Arsenide lasers, semiconductor ring laser, extended cavity diode lasers, or vertical cavity surface-emitting lasers. Additionally or alternatively, non-laser light sources may be used, such as LEDs and/or light bulbs. The illumination source 112 may comprise one or more diffractive optical elements (DOEs) adapted to generate the illumination pattern. For example, the illumination source 112 may be adapted to generate and/or to project a cloud of points, for example the illumination source may comprise one or more of at least one digital light processing projector, at least one LCoS projector, at least one spatial light modulator; at least one diffractive optical element; at least one array of light emitting diodes; at least one array of laser light sources. On account of their generally defined beam profiles and other properties of handleability, the use of at least one laser source as the illumination source is particularly preferred. The illumination source 112 may be integrated into a housing 120 of the detector 110.

The light beam or light beams generated by the illumination source 112 generally may propagate parallel to an optical axis 122 or tilted with respect to the optical axis 112, e.g. including an angle with the optical axis. The detector 110 may be configured such that the light beam or light beams propagates from the detector 110 towards the area 114 along an optical axis of the detector 110. For this purpose, the detector 110 may comprise at least one reflective element, preferably at least one prism, for deflecting the illuminating light beam onto the optical axis 122. As an example, the light beam or light beams, such as the laser light beam, and the optical axis 122 may include an angle of less than 10°, preferably less than 5° or even less than 2°. Other embodiments, however, are feasible. Further, the light beam or light beams may be on the optical axis or off the optical axis. As an example, the light beam or light beams may be parallel to the optical axis 122 having a distance of less 10 than 10 mm to the optical axis, preferably less than 5 mm to the optical axis or even less than 1 mm to the optical axis or may even coincide with the optical axis.

The illumination pattern may comprise at least one illumination feature adapted to illuminate at least one part of the area 114. The illumination pattern may comprise a single illumination feature. The illumination pattern may comprise a plurality of illumination features. The illumination pattern may be selected from the group consisting of: at least one point pattern; at least one line pattern; at least one stripe pattern; at least one checkerboard pattern; at least one pattern comprising an arrangement of periodic or non periodic features. The illumination pattern may comprise regular and/or constant and/or periodic pattern such as a triangular pattern, a rectangular pattern, a hexagonal pattern or a pattern comprising further convex tilings. The illumination pattern may exhibit the at least one illumination feature selected from the group consisting of: at least one point; at least one line; at least two lines such as parallel or crossing lines; at least one point and one line; at least one arrangement of periodic or non-periodic feature; at least one arbitrary shaped featured. The illumination pattern may comprise at least one pattern selected from the group consisting of: at least one point pattern, in particular a pseudo-random point pattern; a random point pattern or a quasi random pattern; at least one Sobol pattern; at least one quasiperiodic pattern; at least one pattern comprising at least one pre-known feature at least one regular pattern; at least one triangular pattern; at least one hexagonal pattern; at least one rectangular pattern at least one pattern comprising convex uniform tilings; at least one line pattern comprising at least one line; at least one line pattern comprising at least two lines such as parallel or crossing lines. For example, the illumination source 112 may be adapted to generate and/or to project a cloud of points. The illumination source 112 may comprise the at least one light projector adapted to generate a cloud of points such that the illumination pattern may comprise a plurality of point pattern. The illumination source 112 may comprise at least one mask adapted to generate the illumination pattern from at least one light beam generated by the illumination source 112.

A distance between two features of the illumination pattern and/or an area of the at least one illumination feature may depend on the circle of confusion in the image. As outlined above, the illumination source 112 may comprise the at least one light source configured for generating the at least one illumination pattern. Specifically, the illumination source comprises at least one laser source and/or at least one laser diode which is designated for generating laser radiation. The illumination source 112 may comprise the at least one diffractive optical element (DOE). The detector 110 may comprise at least one point projector, such as the at least one laser source and the DOE, adapted to project at least one periodic point pattern.

The illumination source 112 may illuminate the at least one object 116 with the illumination pattern. The illumination pattern may comprise a plurality of points. These points are illustrated as light beam 124 emerging from the illumination source 112.

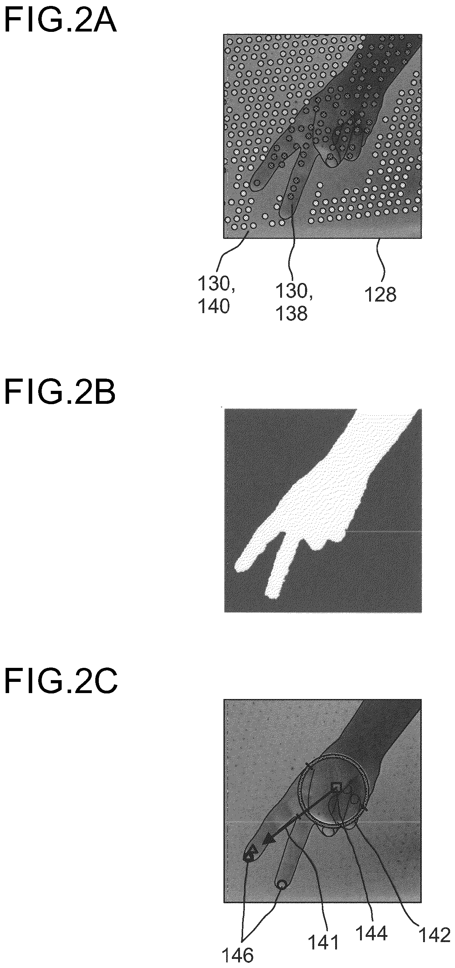

The detector 110 comprises the at least one optical sensor 118 having at least one light-sensitive area 126. The optical sensor 118 is configured for determining at least one image 128 of the area 114. An embodiment of an image is shown in Figure 2A. The image 128 comprises a plurality of reflection features 130 generated by the area 114 in response to illumination by the illumination features. The detector 110 may comprise a plurality of optical sensors 118 each having a light sensitive area 126. Preferably, the light sensitive area 126 may be oriented essentially perpendicular to the optical axis 122 of the detector 110.

The optical sensor 118 specifically may be or may comprise at least one photodetector, preferably inorganic photodetectors, more preferably inorganic semiconductor photodetectors, most preferably silicon photodetectors. Specifically, the optical sensor 118 may be sensitive in the infrared spectral range. The optical sensor 118 may comprise at least one sensor element comprising a matrix of pixels. All pixels of the matrix or at least a group of the optical sensors of the matrix specifically may be identical. Groups of identical pixels of the matrix specifically may be provided for different spectral ranges, or all pixels may be identical in terms of spectral sensitivity. Further, the pixels may be identical in size and/or with regard to their electronic or optoelectronic properties. Specifically, the optical sensor 118 may be or may comprise at least one inorganic photodiode which are sensitive in the infrared spectral range, preferably in the range of 700 nm to 3.0 micrometers. Specifically, the optical sensor 118 may be sensitive in the part of the near infrared region where silicon photodiodes are applicable specifically in the range of 700 nm to 1100 nm. Infrared optical sensors which may be used for optical sensors may be commercially available infrared optical sensors, such as infrared optical sensors commercially available under the brand name Hertzstueck™ from trinamiX™ GmbH, D-67056 Ludwigshafen am Rhein, Germany. Thus, as an example, the optical sensor 118 may comprise at least one optical sensor of an intrinsic photovoltaic type, more preferably at least one semiconductor photodiode selected from the group consisting of: a Ge photodiode, an InGaAs photodiode, an extended InGaAs photodiode, an InAs photodiode, an InSb photodiode, a HgCdTe photodiode. Additionally or alternatively, the optical sensor 118 may comprise at least one optical sensor of an extrinsic photovoltaic type, more preferably at least one semiconductor photodiode selected from the group consisting of: a Ge:Au photodiode, a Ge:Hg photodiode, a Ge:Cu photodiode, a Ge:Zn photodiode, a Si:Ga photodiode, a Si:As photodiode. Additionally or alternatively, the optical sensor 118 may comprise at least one photoconductive sensor such as a PbS or PbSe sensor, a bolometer, preferably a bolometer selected from the group consisting of a VO bolometer and an amorphous Si bolometer.

The optical sensor 118 may be sensitive in one or more of the ultraviolet, the visible or the infrared spectral range. Specifically, the optical sensor 118 may be sensitive in the visible spectral range from 500 nm to 780 nm, most preferably at 650 nm to 750 nm or at 690 nm to 700 nm. Specifically, the optical sensor 118 may be sensitive in the near infrared region. Specifically, the optical sensor 118 may be sensitive in the part of the near infrared region where silicon photodiodes are applicable specifically in the range of 700 nm to 1000 nm. The optical sensor 118, specifically, may be sensitive in the infrared spectral range, specifically in the range of 780 nm to 3.0 micrometers. For example, the optical sensor 118 each, independently, may be or may comprise at least one element selected from the group consisting of a photodiode, a photocell, a photoconductor, a phototransistor or any combination thereof. For example, the optical sensor 118 may be or may comprise at least one element selected from the group consisting of a CCD sensor element, a CMOS sensor element, a photodiode, a photocell, a photoconductor, a phototransistor or any combination thereof. Any other type of photosensitive element may be used. The photosensitive element generally may fully or partially be made of inorganic materials and/or may fully or partially be made of organic materials. Most commonly, one or more photodiodes may be used, such as commercially available photodiodes, e.g. inorganic semiconductor photodiodes.

The optical sensor 118 may comprise at least one sensor element comprising a matrix of pixels. Thus, as an example, the optical sensor 118 may be part of or constitute a pixelated optical device. For example, the optical sensor 118 may be and/or may comprise at least one CCD and/or CMOS device. As an example, the optical sensor 118 may be part of or constitute at least one CCD and/or CMOS device having a matrix of pixels, each pixel forming a light-sensitive area. The sensor element may be formed as a unitary, single device or as a combination of several devices. The sensor element comprises a matrix of optical sensors. The sensor element may comprise at least one CMOS sensor. The matrix may be composed of independent pixels such as of independent optical sensors. Thus, a matrix of inorganic photodiodes may be composed. Alternatively, however, a commercially available matrix may be used, such as one or more of a CCD detector, such as a CCD detector chip, and/or a CMOS detector, such as a CMOS detector chip. Thus, generally, the sensor element may be and/or may comprise at least one CCD and/or CMOS device and/or the optical sensors may form a sensor array or may be part of a sensor array, such as the above-mentioned matrix. Thus, as an example, the sensor element may comprise an array of pixels, such as a rectangular array, having m rows and n columns, with m, n, independently, being positive integers. Preferably, more than one column and more than one row is given, i.e. n>1, m>1. Thus, as an example, n may be 2 to 16 or higher and m may be 2 to 16 or higher. Preferably, the ratio of the number of rows and the number of columns is close to 1. As an example, n and m may be selected such that $0.3 \leq m/n \leq 3$, such as by choosing m/n = 1:1, 4:3, 16:9 or similar. As an example, the array may be a square array, having an equal number of rows and columns, such as by choosing m=2, n=2 or m=3, n=3 or the like.

The matrix may be composed of independent pixels such as of independent optical sensors. Thus, a matrix of inorganic photodiodes may be composed. Alternatively, however, a commercially available matrix may be used, such as one or more of a CCD detector, such as a CCD detector chip, and/or a CMOS detector, such as a CMOS detector chip. Thus, generally, the optical sensor may be and/or may comprise at least one CCD and/or CMOS device and/or the optical sensors of the detector may form a sensor array or may be part of a sensor array, such as the above-mentioned matrix.

The matrix specifically may be a rectangular matrix having at least one row, preferably a plurality of rows, and a plurality of columns. As an example, the rows and columns may be oriented essentially perpendicular. As used herein, the term "essentially perpendicular" refers to the condition of a perpendicular orientation, with a tolerance of e.g. ±20° or less, preferably a tolerance of ±10° or less, more preferably a tolerance of ±5° or less. Similarly, the term "essentially parallel" refers to the condition of a parallel orientation, with a tolerance of e.g. ±20° or less, preferably a tolerance of ±10° or less, more preferably a tolerance of ±5° or less. Thus, as an example, tolerances of less than 20°, specifically less than 10° or even less than 5°, may be acceptable. In order to provide a wide range of view, the matrix specifically may have at least 10 rows, preferably at least 500 rows, more preferably at least 1000 rows. Similarly, the matrix may have at least 10 columns, preferably at least 500 columns, more preferably at least 1000 columns. The matrix may comprise at least 50 optical sensors, preferably at least 100000 optical sensors, more preferably at least 5000000 optical sensors. The matrix may comprise a number of pixels in a multi-mega pixel range. Other embodiments, however, are feasible. Thus, in setups in which an axial rotational symmetry is to be expected, circular arrangements or concentric arrangements of the optical sensors of the matrix, which may also be referred to as pixels, may be preferred.

Thus, as an example, the sensor element may be part of or constitute a pixelated optical device. For example, the sensor element may be and/or may comprise at least one CCD and/or CMOS device. As an example, the sensor element may be part of or constitute at least one CCD and/or CMOS device having a matrix of pixels, each pixel forming a light-sensitive area. The sensor element may employ a rolling shutter or global shutter method to read out the matrix of optical sensors.

The detector 110 further may comprise at least one transfer device 132. The detector 110 may further comprise one or more additional elements such as one or more additional optical elements. The detector 110 may comprise at least one optical element selected from the group consisting of: transfer device, such as at least one lens and/or at least one lens system, at least one diffractive optical element. The transfer device 132 may be adapted to guide the light beam onto the optical sensor. The transfer device 132 specifically may comprise one or more of: at least one lens, for example at least one lens selected from the group consisting of at least one focus-tunable lens, at least one aspheric lens, at least one spheric lens, at least one Fresnel lens; at least one diffractive optical element; at least one concave mirror; at least one beam deflection element, preferably at least one mirror; at least one beam splitting element, preferably at least one of a beam splitting cube or a beam splitting mirror; at least one multi-lens system. The focal length constitutes a measure of an ability of the transfer device 132 to converge an impinging light beam. Thus, the transfer device 132 may comprise one or more imaging elements which can have the effect of a converging lens. By way of example, the transfer device 132 can have one or more lenses, in particular one or more refractive lenses, and/or one or more convex mirrors. In this example, the focal length may be defined as a distance from the center of the thin refractive lens to the principal focal points of the thin lens. For a converging thin refractive lens, such as a convex or biconvex thin lens, the focal length may be considered as being positive and may provide the distance at which a beam of collimated light impinging the thin lens as the transfer device may be focused into a single spot. Additionally, the transfer device 132 can comprise at least one wavelength-selective element, for example at least one optical filter. Additionally, the transfer device can be designed to impress a predefined beam profile on the electromagnetic radiation, for example, at the location of the sensor region and in particular the sensor area. The above-mentioned optional embodiments of the transfer device 132 can, in principle, be realized individually or in any desired combination.

The transfer device 132 may have an optical axis. In particular, the detector 110 and the transfer device 132 have a common optical axis 122. The optical axis 122 may be a line of symmetry of the optical setup of the detector 110. The transfer device 132 may constitute a coordinate system 134, wherein a longitudinal coordinate is a coordinate along the optical axis 122 and wherein d is a spatial offset from the optical axis 122. The coordinate system 134 may be a polar coordinate system in which the optical axis of the transfer device 132 forms a z-axis and in which a distance from the z-axis and a polar angle may be used as additional coordinates. A direction parallel or antiparallel to the z-axis may be considered a longitudinal direction, and a coordinate along the z-axis may be considered a longitudinal coordinate. Any direction perpendicular to the z-axis may be considered a transversal direction, and the polar coordinate and/or the polar angle may be considered a transversal coordinate.

The optical sensor 118 is configured for determining the at least one image 128 of the area 114. The image 128 comprises a plurality of reflection features 130 generated by the area in response to illumination by the illumination features. The image 128 may be at least one two-dimensional image. The image 128 may be an RGB (red green blue) image.

The detector comprises the at least one evaluation device 136. The evaluation device 136 is configured for evaluating the image 128. The evaluation device 136 may comprise at least one data processing device and, more preferably, by using at least one processor and/or at least one application-specific integrated circuit. Thus, as an example, the at least one evaluation device 136 may comprise at least one data processing device having a software code stored thereon comprising a number of computer commands. The evaluation device 136 may provide one or more hardware elements for performing one or more of the named operations and/or may provide one or more processors with software running thereon for performing one or more of the named operations. Operations, including evaluating the images. Specifically the determining a beam profile and indication of the surface, may be performed by the at least one evaluation device 136. Thus, as an example, one or more instructions may be implemented in software and/or hardware. Thus, as an example, the evaluation device 136 may comprise one or more programmable devices such as one or more computers, application-specific integrated circuits (ASICs), Digital Signal Processors (DSPs), or Field Programmable Gate Arrays (FPGAs) which are configured to perform the above-mentioned evaluation. Additionally or alternatively, however, the evaluation device 136 may also fully or partially be embodied by hardware.

The evaluation device 136 and the detector 110 may fully or partially be integrated into a single device. Thus, generally, the evaluation device 136 also may form part of the detector 110. Alternatively, the evaluation device 136 and the detector 110 may fully or partially be embodied as separate devices. The detector 110 may comprise further components.

The evaluation device 136 is configured for determining at least one depth map of the area 114 by determining at least one depth information for each of the reflection features 130. The evaluation device 136 may be configured for determining the depth information for each of the reflection features 130 by one or more of the following techniques: depth-from-photon-ratio, structured light, beam profile analysis, time-of-flight, shape-from-motion, depth-from-focus, triangulation, depth-from-defocus, stereo sensors. The evaluation device 136 may be configured for considering the depth information for segmenting the object 116, in particular a hand region in the image 128, from the background in terms of the depth map.

For example, the evaluation device 136 may be configured for determining the depth information for each of the reflection features 130 by using depth-from-photon-ratio technique. Each of the reflection features 130 may comprise at least one beam profile, also denoted reflection beam profile. The beam profile may be selected from the group consisting of a trapezoid beam profile; a triangle beam profile; a conical beam profile and a linear combination of Gaussian beam profiles. The evaluation device 136 may be configured for determining depth information for each of the reflection features 130 by analysis of their beam profiles.

The evaluation device 136 may be configured for determining at least one longitudinal coordinate $Z_{DPR}$ for each of the reflection features 130 by analysis of their beam profiles. For example, the analysis of the beam profile may comprise at least one of a histogram analysis step, a calculation of a difference measure, application of a neural network, application of a machine learning algorithm. The evaluation device 136 may be configured for symmetrizing and/or for normalizing and/or for filtering the beam profile, in particular to remove noise or asymmetries from recording under larger angles, recording edges or the like. The evaluation device 136 may filter the beam profile by removing high spatial frequencies such as by spatial frequency analysis and/or median filtering or the like. Summarization may be performed by center of intensity of the light spot and averaging all intensities at the same distance to the center. The evaluation device 136 may be configured for normalizing the beam profile to a maximum intensity, in particular to account for intensity differences due to the recorded distance. The evaluation device 136 may be configured for removing influences from background light from the beam profile, for example, by an imaging without illumination.

The evaluation device 136 may be configured for determining the longitudinal coordinate $Z_{DPR}$ for each of the reflection features by using depth-from-photon-ratio technique. With respect to depth-from-photon-ratio (DPR) technique reference is made to WO 2018/091649 A1, WO 2018/091638 A1 and WO 2018/091640 A1, the full content of which is included by reference. The evaluation device 136 may be configured for executing at least one depth-from-photon-ratio algorithm which computes distances for all reflection features 130 with zero order and higher order.

The evaluation of the image 128 comprises identifying the reflection features 130 of the image 128. The evaluation device 136 may be configured for performing at least one image analysis and/or image processing in order to identify the reflection features 130. The image analysis and/or image processing may use at least one feature detection algorithm. The image analysis and/or image processing may comprise one or more of the following: a filtering; a selection of at least one region of interest; a formation of a difference image between an image created by the sensor signals and at least one offset; an inversion of sensor signals by inverting an image created by the sensor signals; a formation of a difference image between an image created by the sensor signals at different times; a background correction; a decomposition into color channels; a decomposition into hue; saturation; and brightness channels; a frequency decomposition; a singular value decomposition; applying a blob detector; applying a corner detector; applying a Determinant of Hessian filter; applying a principle curvature-based region detector; applying a maximally stable extremal regions detector; applying a generalized Hough-transformation; applying a ridge detector; applying an affine invariant feature detector; applying an affine-adapted interest point operator; applying a Harris affine region detector; applying a Hessian affine region detector; applying a scale-invariant feature transform; applying a scale-space extrema detector; applying a local feature detector; applying speeded up robust features algorithm; applying a gradient location and orientation histogram algorithm; applying a histogram of oriented gradients descriptor; applying a Deriche edge detector; applying a differential edge detector; applying a spatio-temporal interest point detector; applying a Moravec corner detector; applying a Canny edge detector; applying a Laplacian of Gaussian filter; applying a Difference of Gaussian filter; applying a Sobel operator; applying a Laplace operator; applying a Scharr operator; applying a Prewitt operator; applying a Roberts operator; applying a Kirsch operator; applying a high-pass filter; applying a low-pass filter; applying a Fourier transformation; applying a Radon-transformation; applying a Hough-transformation; applying a wavelet-transformation; a thresholding; creating a binary image. The region of interest may be determined manually by a user or may be determined automatically, such as by recognizing a feature within the image 128 generated by the optical sensor 118.

For example, the illumination source 112 may be configured for generating and/or projecting a cloud of points such that a plurality of illuminated regions is generated on the optical sensor 118, for example the CMOS detector. Additionally, disturbances may be present on the optical sensor 118 such as disturbances due to speckles and/or extraneous light and/or multiple reflections. The evaluation device 136 may be adapted to determine at least one region of interest, for example one or more pixels illuminated by the light beam which are used for determination of the longitudinal coordinate of the object. For example, the evaluation device 136 may be adapted to perform a filtering method, for example, a blob-analysis and/or an edge filter and/or object recognition method.

The evaluation device 136 may be configured for performing at least one image correction. The image correction may comprise at least one background subtraction. The evaluation device 136 may be adapted to remove influences from background light from the beam profile, for example, by an imaging without further illumination.

The evaluation device 136 is configured for finding the object 116 by identifying the reflection features 130 which were generated by illuminating biological tissue. The evaluation device 136 is configured for determining the at least one reflection beam profile of each of the reflection features 130. The evaluation device 136 is configured for identifying a reflection feature 130 as to be generated by illuminating biological tissue in case its reflection beam profile fulfills at least one predetermined or predefined criterion. The evaluation device 136 is configured for identifying the reflection feature 130 as to be background otherwise.

The detector 110 may be a device for detection, in particular optical detection, of biological tissue, in particular of human skin. The identification of being generated by biological tissue may comprise determining and/or validating whether a surface to be examined or under test is or comprises biological tissue, in particular human skin, and/or to distinguish biological tissue, in particular human skin, from other tissues, in particular other surfaces, and/or distinguishing different types of biological tissue such as distinguishing different types of human tissue e.g. muscle, fat, organs, or the like. For example, the biological tissue may be or may comprise human tissue or parts thereof such as skin, hair, muscle, fat, organs, or the like. For example, the biological tissue may be or may comprise animal tissue or a part thereof such as skin, fur, muscle, fat, organs, or the like. For example, the biological tissue may be or may comprise plant tissue or a part thereof. The detector 110 may be adapted to distinguish animal tissue or parts thereof from one or more of inorganic tissue, metal surfaces, plastics surfaces, for example of farming machines or milking machines. The detector 110 may be adapted to distinguish plant tissue or parts thereof from one or more of inorganic tissue, metal surfaces, plastics surfaces, for example of farming machines. The detector 110 may be adapted to distinguish food and/or beverage from dish and/or glasses. The detector 110 may be adapted to distinguish different types of food such as a fruit, meat, and fish. The detector 110 may be adapted to distinguish a cosmetics product and/or, an applied cosmetics product from human skin. The detector 110 may be adapted to distinguish human skin from foam, paper, wood, a display, a screen. The detector 110 may be adapted to distinguish human skin from cloth. The detector 110 may be adapted to distinguish a maintenance product from material of machine components such metal components etc. The detector 110 may be adapted to distinguish organic material from inorganic material. The detector 110 may be adapted to distinguish human biological tissue from surfaces of artificial or non-living objects. The detector 110 may be used, in particular, for non-therapeutic and non-diagnostic applications.

The predetermined or predefined criterion may be or may comprise at least one property and/or value suitable to distinguish biological tissue, in particular human skin, from other materials. The predetermined or predefined criterion may be or may comprise at least one predetermined or predefined value and/or threshold and/or threshold range referring to a material property. The reflection feature 130 may be indicated as to be generated by biological tissue in case the reflection beam profile fulfills at least one predetermined or predefined criterion. The indication may be an arbitrary indication such as an electronic signal and/or at least one visual or acoustic indication.

The evaluation device 136 may be configured for determining at least one material property m of the object by evaluating the beam profile of the reflection feature. The material property may be or may comprise at least one arbitrary property of the material configured for characterizing and/or identification and/or classification of the material. For example, the material property may be a property selected from the group consisting of: roughness, penetration depth of light into the material, a property characterizing the material as biological or non-biological material, a reflectivity, a specular reflectivity, a diffuse reflectivity, a surface property, a measure for translucence, a scattering, specifically a back-scattering behavior or the like. The at least one material property may be a property selected from the group consisting of: a scattering coefficient, a translucency, a transparency, a deviation from a Lambertian surface reflection, a speckle, and the like. The identifying at least one material property may comprise one or more of determining and assigning the material property to the object. The detector 110 may comprise at least one database comprising a list and/or table, such as a lookup list or a lookup table, of predefined and/or predetermined material properties. The list and/or table of material properties may be determined and/or generated by performing at least one test measurement using the detector according to the present invention, for example by performing material tests using samples having known material properties. The list and/or table of material properties may be determined and/or generated at the manufacturer site and/or by the user of the detector 110. The material property may additionally be assigned to a material classifier such as one or more of a material name, a material group such as biological or non-biological material, translucent or non-translucent materials, metal or non-metal, skin or non-skin, fur or non-fur, carpet or non-carpet, reflective or non-reflective, specular reflective or non-specular reflective, foam or non-foam, hair or non-hair, roughness groups or the like. The detector 110 may comprise at least one database comprising a list and/or table comprising the material properties and associated material name and/or material group.

For example, without wishing to be bound by this theory, human skin may have a reflection profile, also denoted back scattering profile, comprising parts generated by back reflection of the surface, denoted as surface reflection, and parts generated by very diffuse reflection from light penetrating the skin, denoted as diffuse part of the back reflection. With respect to reflection profile of human skin reference is made to "Lasertechnik in der Medizin: Grundlagen, Systeme, Anwendungen", "Wirkung von Laserstrahlung auf Gewebe", 1991, pages 10 171 to 266, Jürgen Eichler, Theo Seiler, Springer Verlag, ISBN 0939-0979. The surface reflection of the skin may increase with the wavelength increasing towards the near infrared. Further, the penetration depth may increase with increasing wavelength from visible to near infrared. The diffuse part of the back reflection may increase with penetrating depth of the light. These properties may be used to distinguish skin from other materials, by analyzing the back scattering profile.

Specifically, the evaluation device 136 may be configured for comparing the reflection beam profile with at least one predetermined and/or prerecorded and/or predefined beam profile. The predetermined and/or prerecorded and/or predefined beam profile may be stored in a table or a lookup table and may be determined e.g. empirically, and may, as an example, be stored in at least one data storage device of the detector. For example, the predetermined and/or prerecorded and/or predefined beam profile may be determined during initial start-up of a mobile device comprising the detector. For example, the predetermined and/or prerecorded and/or prede-fined beam profile may be stored in at least one data storage device of the mobile device, e.g. by software, specifically by the app downloaded from an app store or the like. The reflection feature 130 may be identified as to be generated by biological tissue in case the reflection beam profile and the predetermined and/or prerecorded and/or predefined beam profile are identical. The comparison may comprise overlaying the reflection beam profile and the predetermined or predefined beam profile such that their centers of intensity match. The comparison may comprise determining a deviation, e.g. a sum of squared point to point distances, between the reflection beam profile and the predetermined and/or prerecorded and/or predefined beam profile. The evaluation device 136 may be adapted to compare the determined deviation with at least one threshold, wherein in case the determined deviation is below and/or equal the threshold the surface is indicated as biological tissue and/or the detection of biological tissue is confirmed. The threshold value may be stored in a table or a lookup table and may be determined e.g. empirically and may, as an example, be stored in at least one data storage device of the detector 110.

Additionally or alternatively, for identification if the reflection feature 130 was generated by biological tissue, the evaluation device 136 may be configured for applying at least one image filter to the image 128 of the area 114. The evaluation device 136 may be configured for determining at least one material feature $\varphi_{2m}$ by applying at least one material dependent image filter $\Phi_2$ to the image. The material feature may be or may comprise at least one information about the at least one material property of the surface of the area 114 having generated the reflection feature 130.

The material dependent image filter may be at least one filter selected from the group consisting of: a luminance filter; a spot shape filter; a squared norm gradient; a standard deviation; a smoothness filter such as a Gaussian filter or median filter; a grey-level-occurrence-based contrast filter; a grey-level-occurrence-based energy filter; a grey-level-occurrence-based homogeneity filter; a grey-level-occurrence-based dissimilarity filter; a Law's energy filter; a threshold area filter; or a linear combination thereof; or a further material dependent image filter $\Phi_{2other}$ which correlates to one or more of the luminance filter, the spot shape filter, the squared norm gradient, the standard deviation, the smoothness filter, the grey-level-occurrence-based energy filter, the grey-level-occurrence-based homogeneity filter, the grey-level-occurrence-based dissimilarity filter, the Law's energy filter, or the threshold area filter, or a linear combination thereof by $|\rho_{\Phi2other,\Phi m}| \geq 0.40$ with $\Phi_m$ being one of the luminance filter, the spot shape filter, the squared norm gradient, the standard deviation, the smoothness filter, the grey-level-occurrence-based energy filter, the grey-level-occurrence-based homogeneity filter, the grey-level-occurrence-based dissimilarity filter, the Law's energy filter, or the threshold area filter, or a linear combination thereof. The further material dependent image filter $\Phi_{2other}$ may correlate to one or more of the material dependent image filters $\Phi_m$ by $|\rho_{\Phi2other,\Phi m}| \geq 0.60$, preferably by $|\rho_{\Phi2other,\Phi m}| \geq 0.80$.

The evaluation device 136 may be configured for using at least one predetermined relationship between the material feature $\varphi_{2m}$ and the material property of the surface having generated the reflection feature 130 for determining the material property of the surface having generated the reflection feature 130. The predetermined relationship may be one or more of an empirical relationship, a semi-empiric relationship and an analytically derived relationship. The evaluation device 136 may comprise at least one data storage device for storing the predetermined relationship, such as a lookup list or a lookup table.

The evaluation device 136 is configured for identifying a reflection feature 130 as to be generated by illuminating biological tissue in case its corresponding material property fulfills the at least one predetermined or predefined criterion. The reflection feature 130 may be identified as to be generated by biological tissue in case the material property indicates "biological tissue". The reflection feature 130 may be identified as to be generated by biological tissue in case the material property is below or equal at least one threshold or range, wherein in case the determined deviation is below and/or equal the threshold the reflection feature is identified as to be generated by biological tissue and/or the detection of biological tissue is confirmed. At least one threshold value and/or range may be stored in a table or a lookup table and may be determined e.g. empirically and may, as an example, be stored in at least one data storage device of the detector. The evaluation device 136 is configured for identifying the reflection feature as to be background otherwise. Thus, the evaluation device 136 may be configured for assigning each projected spot with a depth information and a material property, e.g. skin yes or no.

**[0173]** The material property may be determined by evaluating $\varphi_{2m}$ subsequently after determining of the longitudinal coordinate z such that the information about the longitudinal coordinate z can be considered for evaluating of $\varphi_{2m}$.

The evaluation device 136 is configured for segmenting the image 128 of the area 114 by using at least one segmentation algorithm. The segment may comprise a set of pixels. The segmenting may comprise a process of partitioning the image 128 into multiple segments. The segmentation may comprise assigning at least one label to every pixel of the image 128 such that pixels with the same label share at least one characteristic. The labels may be assigned under a pre-defined target. The segmentation may be a binary segmentation. The binary segmentation may comprise labeling the pixels of the image 128 as "skin-pixels" 138 and "background pixel" 140. All non-skin pixels may be considered as background. Skin-pixels may be considered as foreground seeds, also denoted seed points, serving as input for an image-based segmentation algorithm. With respect to image segmenting reference is made to https://en.wikipedia.org/wiki/Image_segmentation. The segmentation algorithm may comprise at least one region growing image segmentation method.

The segmentation algorithm may be configured for fusioning and/or considering a-priory knowledge. Specifically, the segmentation algorithm may be configured for fusioning and/or considering the material information determined from the beam profile analysis. This may allow to obtain or filter position data for motions of visible skin only. In contrast, in conventional setups, a recognition and separation of e.g. what is a finger/arm and what is not, needs to be done first. In addition to using the material information, the evaluation device 136 may be configured for considering the depth information for segmenting the object, in particular a hand region in the image, from the background in terms of the depth map.

The segmentation algorithm may be based on energy or cost functions such as one or more of graph cut, level-set, fast marching and Markov random field approaches. Segmentation of the image may be driven by color homogeneity and edge indicators, wherein the seed points constitute edge- and color homogeneity criterions. The reflection features 130 identified as to be generated by illuminating biological tissue are used as seed points and the reflection features identified as background are used as background seed points for the segmentation algorithm. These seed points may constitute, edge- and color homogeneity criterions, and thus provide an appropriate initialization of the segmentation of the target: "Which color and/or reflection and/or appearance has the skin in the image?".

For example, graph cut segmentation may be used. Graph cut segmentation may be configured for fusioning the a-priory knowledge as it additionally provides real-time capability when combining it with pre-clustering algorithms such as superpixels, see R. Achanta, A. Shaji, K. Smith, A. Lucchi, P. Fua, and S. Süsstrunk, "Slic superpixels compared to state-of-the-art superpixel methods," IEEE TPAMI, vol. 34, no. 11, 2012. For example, a modified lazy snapping graph cut may be used. With respect to modified lazy snapping graph cut reference is made to Li, Yin and Sun, Jian and Tang, Chi-Keung and Shum, Heung-Yeung, "Lazy Snapping", ACM Trans. Graph., vol. 23, no. 3, 2004. The Gibbs energy term may comprise an additional term to incorporate depth information for the graph cut segmentation routine. Instead of watershed-based pre-segmentation as proposed in Li, Yin and Sun, Jian and Tang, Chi-Keung and Shum, Heung-Yeung, "Lazy Snapping", ACM Trans, a superpixel clustering may be used to ensure real-time capability.

The image 128 before the segmentation is shown in Figure 2A. Each projected spot is assigned with a depth and a material property (skin yes/no). To obtain the binary segmentation illustrated in Figure 2B, all non-skin points are considered as background, skin-points are considered as foreground seeds serving as input for an image-based segmentation routine. In this example, a modified lazy snapping graph cut was used. The Gibbs energy term includes an additional term to incorporate depth information for the graph cut segmentation routine. Furthermore, a superpixel clustering was used to ensure real-time capability.

The evaluation device 136 is configured for determining position and/or orientation of the object 116 in space considering the segmented image and the depth map. The evaluation device 136 may be configured for determining at least one hand pose or gesture from the position and/or the orientation of the object 116 in space. The evaluation device 136 may be configured for recognition of gestures from the segmented image, in particular from the parts of the segmented image labeled as object 116. The evaluation device 136 may be configured for identifying image coordinates of palm and finger in the segmented image. Palm and finger identification may be obtained from the segmentation. The evaluation device 136 may be configured for extracting features such as color and/or brightness and/or gradient values from the parts of the segmented image labeled as object. For example, palm and finger tips may be detected using standard OpenCV routines.

The evaluation device 136 may be configured for determining at least one three-dimensional finger vector 141 considering image coordinates of palm 142, such as of a center point 144 of the palm, and finger tip 146 and the depth map. Figure 2C shows an embodiment of the 3D finger vector 140. The 3D finger vector 140 may specify the position and orientation of the finger in space. The evaluation device 136 may be configured for determining the 3D finger vector 140 from the image 128 and depth map. The 3D finger vector 140 may provide the basis for hand pose estimation and scene interpretation. For the recognition of hand gestures, the evaluation device 136 may be configured for using at least one classifier such as a hidden Markov model (HMM), a support vector machine (SVM), a conditional random field (CRF) and the like. The classifier may be configured for discriminating hand gestures.

The use of the beam profile analysis sensor fusion concept according to the present invention have the advantages for providing robust detection results, no need for complex model assumptions, a single sensor concept, easy integration and real-time capability.

List of reference numbers

**[0182]**

110    detector
112    illumination source
114    area
116    object
118    optical sensor
120    housing
122    optical axis
124    Light beam
126    light-sensitive area
128    image
130    Reflection feature
132    transfer device
134    coordinate system
136    evaluation device
138    skin-pixels
140    background pixel
141    three-dimensional finger vector
142    palm
144    center point
146    finger tip

**Claims**

**1.** Detector (110) for gesture detection comprising:

- an illumination source (112) configured for projecting an illumination pattern comprising a plurality of illumination features on an area (114) comprising an object (116), wherein the object (116) comprises a face;
- an optical sensor (118) having a light-sensitive area (126), wherein the optical sensor (118) is configured for determining an image (128) of the area, wherein the image (128) comprises a plurality of reflection features (130) generated by the area (114) in response to illumination by the illumination features;
- an evaluation device (136), wherein the evaluation device (136) is configured for determining a depth map of the area by determining depth information for the reflection features (130),
wherein the evaluation device (136) is configured for identifying a reflection feature (130) as being generated by illuminating skin by comparing its intensity distribution with a predetermined or predefined intensity distribution,
wherein the evaluation device (136) is configured for segmenting the image (128) of the area by using a segmentation algorithm,
wherein the evaluation device (136) is configured for determining an orientation of the object (116) in space considering the segmented image and the depth map.

2. Detector (110) according to claim 1, wherein the illumination source comprises at least one laser source and a diffractive optical element.

3. Detector (110) according to claim 1 or 2, wherein the illumination source emits light of a wavelength in the range of 700 nm to 1100 nm.

4. Detector (110) according to any of the claims 1 to 3, wherein the illumination source comprises an array of vertical cavity surface-emitting lasers.

5. Detector (110) according to any of the claims 1 or 4, wherein the illumination pattern is a pseudo-random point pattern.

6. Detector (110) according to any of the claims 1 or 5, wherein the optical sensor is a CMOS device having a matrix of pixels and a global shutter.

7. Detector (110) according to any of the claims 1 or 6, wherein the depth map is determined by structured light.

8. Detector (110) according to any of the claims 1 or 7, wherein the depth map comprises depth information for each of the reflection features.

9. Detector (110) according to any of the claims 1 or 8, wherein a reflection feature (130) is identified as being generated by illuminating skin based on a translucency, a transparency, a deviation from a Lambertian surface reflection.

10. Detector (110) according to any of the claims 1 or 9, wherein a reflection feature (130) is identified as being generated by illuminating skin by applying at least one image filter.

11. Detector (110) according to any of the claims 1 or 10, wherein comparing the intensity distribution with a predetermined or predefined intensity distribution is performed by applying a neural network.

12. Detector (110) according to any of the claims 1 or 11, wherein the detector is configured for a security application.

13. Method for gesture detection comprising the following steps:

a) projecting an illumination pattern comprising a plurality of illumination features on an area (114) comprising an object (116), wherein the object (116) comprises a face;
b) determining an image (128) of the area (114) using an optical sensor (118) having a light-sensitive area (126), wherein the image (128) comprises a plurality of reflection features (130) generated by the area (114) in response to illumination by the illumination features;
c) determining a depth map of the area (114) by determining a depth information for the reflection features (130);
d) identifying a reflection feature (130) as being generated by illuminating skin by comparing its intensity distribution with a predetermined or predefined intensity distribution ;
e) segmenting the image (128) of the area (114) by using a segmentation algorithm;
f) determining an orientation of the object (116) in space considering the segmented image and the depth map.

14. Method according to claim 13, wherein the illumination source emits light of a wavelength in the range of 700 nm to 1100 nm.

**15.** Method according to claim 13 or 14, wherein the illumination pattern is a pseudo-random point pattern.

**16.** Method according to any of the claims 13 to 15, wherein the depth map is determined by structured light.

**17.** Method according to any of the claims 13 to 16, wherein the depth map comprises depth information for each of the reflection features.

**18.** Method according to any of the claims 13 to 17, wherein a reflection feature (130) is identified as being generated by illuminating skin based on a translucency, a transparency, a deviation from a Lambertian surface reflection.

**19.** Method according to any of the claims 13 to 18, wherein comparing the intensity distribution with a predetermined or predefined intensity distribution is performed by applying a neural network.

**20.** Method according to any of the claims 13 to 19, wherein the method is used for a security application.

FIG.1

FIG.2A

130,
140

130,
138

128

FIG.2B

FIG.2C

146

141  144  142

**EP 4 600 922 A1**

Europäisches
Patentamt
European
Patent Office
Office européen
des brevets

# EUROPEAN SEARCH REPORT

Application Number

EP 25 17 4744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 737 235 A (CHINESE ACAD INST AUTOMATION) 17 October 2012 (2012-10-17) * paragraphs 1-110 of the English machine translation; figures 1-8 * | 1-20 | INV. G06V40/20 G06V10/143 G06V10/10 G06V10/26 G06V10/60 G06V10/75 G06V20/64 G06V40/10 |
| L | An: "Kinect", , 12 May 2018 (2018-05-12), pages 1-22, XP055777814, WIKIPEDIA Retrieved from the Internet: URL:https://en.wikipedia.org/w/index.php?title=Kinect&oldid=840783136 [retrieved on 2021-02-19] | | |

TECHNICAL FIELDS
SEARCHED        (IPC)

G06K
G06V

The present search report has been drawn up for all claims

| Place of search | Date of completion of the search | Examiner |
|---|---|---|
| The Hague | 16 June 2025 | Atmatzidis, Lazaros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 4744

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2025

| Patent document cited in search report | Publication date | Patent family member(s) | Publication date |
|---|---|---|---|
| CN 102737235 A | 17-10-2012 | NONE | |

## REFERENCES CITED IN THE DESCRIPTION

### Patent documents cited in the description

- WO 2018091640 A
- WO 2019042956 A
- US 2016253821 A1
- WO 2018091649 A1
- WO 2018091638 A1
- WO 2018091640 A1

### Non-patent literature cited in the description

- **A. R. VÁRKONYI-KÓCZY** ; **B. TUSOR**. Human-Computer Interaction for Smart Environment Applications Using Fuzzy Hand Posture and Gesture Models. *IEEE Trans. Instrumentation and Measurement*, 2011, vol. 60 (5), 1505-1514
- **C. C. HSIEH** ; **D. H. LIOU**. Novel Haar features for real-time hand gesture recognition. *J. Real Time Image Processing*, 2015, vol. 10, 357370
- **E. ONG** ; **R. BOWDEN**. A boosted classifier tree for hand shape detection. *Sixth IEEE International Conference on Automatic Face and Gesture Recognition, 2004. Proceedings., Seoul, South Korea*, 2004, 889-894
- Combining RGB and ToF cameras for real-time 3D hand gesture interaction. **M. BERGH** ; **L. GOOL**. Workshop on applications of computer vision (WACV). IEEE, 2011, 66-72
- **R. CUTLER** ; **M. TURK.** View-based Interpretation of Realtime Optical Flow for Gesture Recognition. *Proc. IEEE Intl. Conference on Automatic Face and Gesture Recognition*, 1998, 416-421
- Lasertechnik in der Medizin: Grundlagen, Systeme, Anwendungen. **JÜRGEN EICHLER** ; **THEO SEILER**. Wirkung von Laserstrahlung auf Gewebe. Springer Verlag, 1991, 10171-266
- **R. ACHANTA** ; **A. SHAJI** ; **K. SMITH** ; **A. LUCCHI** ; **P. FUA** ; **S. SÜSSTRUNK**. Slic superpixels compared to state-of-the-art superpixel methods. *IEEE TPAMI*, 2012, vol. 34 (11)
- **LI, YIN** ; **SUN, JIAN** ; **TANG, CHI-KEUNG** ; **SHUM, HEUNG-YEUNG**. Lazy Snapping. *ACM Trans. Graph.*, 2004, vol. 23 (3)
- **LI, YIN** ; **SUN, JIAN** ; **TANG, CHI-KEUNG** ; **SHUM, HEUNG-YEUNG**. Lazy Snapping. *ACM Trans*
- **LI, YIN** ; **SUN, JIAN** ; **TANG, CHI-KEUNG** ; **SHUM, HEUNG-YEUNG**. Lazy Snapping. *ACM Trans. Graph*, 2004, vol. 23 (3)